# EUROPÄISCHE PATENTSCHRIFT

(11) **EP 3 841 323 B1**
(45) Veröffentlichungstag und Bekanntmachung des Hinweises auf die Patenterteilung: **04.10.2023**
(21) Anmeldenummer: 19762691.4
(22) Anmeldetag: 20.08.2019
(51) Int. Cl.: F17C 13/00, B22F 3/105, C23C 24/04, B33Y 10/00, F17C 1/02

(54) **VERFAHREN ZUR HERSTELLUNG EINES EINEN LEICHTBAU-DRUCKTANK BILDENDEN LEICHTBAU-DRUCKBEHÄLTERS UND LEICHTBAU-DRUCKBEHÄLTER**
METHOD FOR PRODUCING A LIGHT-WEIGHT PRESSURE CONTAINER FORMING A LIGHT-WEIGHT PRESSURE TANK, AND LIGHT-WEIGHT PRESSURE CONTAINER
PROCÉDÉ DE FABRICATION D'UN RÉCIPIENT LÉGER SOUS PRESSION FORMANT UN RÉSERVOIR LÉGER SOUS PRESSION ET RÉCIPIENT LÉGER SOUS PRESSION

(30) Priorität: 21.08.2018 DE 102018120291; 21.08.2018 DE 102018120293
(43) Veröffentlichungstag der Anmeldung: 30.06.2021
(73) Patentinhaber: LARCH, Sascha, 86356 Neusäss (DE)
(72) Erfinder: LARCH, Sascha, 86356 Neusäss (DE)
(74) Vertreter: Schlimme, Wolfram
(86) Internationale Anmeldenummer: PCT/EP2019/072241
(87) Internationale Veröffentlichungsnummer: WO 2020/038927

(56) Entgegenhaltungen:
- EP-A1- 3 333 474
- WO-A1-2017/114584
- DE-A1-102013 216 439
- FR-A1- 3 025 491
- US-A- 5 085 343
- US-A1- 2015 246 394

## Beschreibung

### TECHNISCHES GEBIET

Die vorliegende Erfindung betrifft ein Verfahren zur Herstellung eines einen Leichtbau-Drucktank bildenden Leichtbau-Druckbehälters gemäß Ansprüchen 1 sowie 3. Insbesondere betrifft die Erfindung ein Verfahren zur Herstellung eines Satelliten-, Raumfahrzeug- oder Raketentanks sowie einen mit diesem Verfahren hergestellten Satelliten-, Raumfahrzeug- oder Raketentank.

### HINTERGRUND DER ERFINDUNG

Druckbehälter, die einem hohen Innendruck gegenüber einem niedrigeren Außendruck standhalten müssen, sind allgemein bekannt. Üblicherweise werden derartige Druckbehälter aus Stahlblechen gefertigt, die zu einem zylindrischen Behälterabschnitt verschweißt werden, wobei an den offenen Seiten dieses Zylinders domartige Behälterböden angebracht werden. Diese domartigen Behälterböden werden zumeist aus dreieckigen oder trapezförmigen Blechen hergestellt, die gebogen und zu einer Raumform miteinander verschweißt werden. Die Verbindung der Behälterböden mit dem Zylinderabschnitt des Druckbehälters erfolgt entweder ebenfalls durch Schweißen oder mittels Flanschen. Kritisch ist bei solchen Schweißnähte aufweisenden Druckbehältern die Qualität der Schweißnaht, da auf jeden Fall zu vermeiden ist, dass der unter Druck gesetzte Druckbehälter an den möglicherweise Schwachstellen bildenden Schweißnähten reißt und platzt. Daher sind diese Schweißnähte mit größter Sorgfalt zu fertigen und der Druckbehälter ist regelmäßigen Drucktests zu unterziehen.

Eine besondere Herausforderung stellen Leichtbau-Druckbehälter dar, wie sie beispielsweise als Treibstofftanks in der Raumfahrttechnik verwendet werden. Bei diesen Tanks ist das Gewicht auf ein Minimum zu reduzieren, so dass es hier üblich geworden ist, den Behälter mit einer sehr dünnen Behälterwand und gegebenenfalls einer mit dieser dünnen Behälterwand verbundenen Stützstruktur auf der Behälterinnenseite oder der Behälteraußenseite auszugestalten. Dazu wird aus einem dicken Wandmaterial in spanabhebender Fertigung, beispielsweise durch Fräsen, auf der Innenseite des Behälters so viel Material abgetragen, dass eine dünne Wandhaut mit sich daran auf der Innenseite (oder der Außenseite) anschließenden Versteifungselementen, wie zum Beispiel Längsrippen und Spanten, ausbildet. Es liegt auf der Hand, dass ein derartiges Herstellungsverfahren zeit- und kostenaufwendig ist. Auch die dreieckigen oder trapezförmigen Segmente für die Herstellung des jeweiligen Behälterbodens werden auf diese Weise aus dem Vollen gefräst. Die so erhaltenen ebenen Komponenten werden dann, beispielsweise mittels Kugelstrahlen, umgeformt in räumlich gewölbte Dreiecke beziehungsweise Trapeze, die dann zur Bildung des domartigen Behälterbodens miteinander verschweißt werden. Dort wo Schweißnähte vorgesehen sind, muss bei der spanabhebenden Bearbeitung eine dickere Wandstärke erhalten bleiben, um das Schweißen zu ermöglichen, und die geringe Materialfestigkeit in der Schweißnaht zu kompensieren. Diese lokal dickere Wandstärke erhöht wiederum die Masse und damit das Gewicht des Druckbehälters.

Das Verschweißen der einzelnen Komponenten erfolgt üblicherweise durch Wolfram-Inertgasschweißen oder durch Rührreibschweißen, wozu spezielle Schweißanlagen erforderlich sind, die an die Geometrie und den Durchmesser der zu schweißenden Behälterböden angepasst sein müssen und die zu hohen Kosten als Sondermaschinenbau hergestellt werden müssen.

Bei der herkömmlichen Vorgehensweise zur Herstellung von Leichtbau-Druckbehältern, insbesondere von Raketentanks, ist somit nachteilig, dass die Herstellung der einzelnen Komponenten (einschließlich des zylindrischen Tankkörpers) durch Fräsen aus dem Vollen sowie das Verschweißen der Teile miteinander sehr zeit- und kostenaufwändig ist. Zudem müssen die einzelnen Körper im Bereich der Schweißnaht eine dickere Wandstärke aufweisen, als dies ohne Schweißnaht erforderlich wäre. Für diesen Fertigungsprozess bedarf es sehr großer Maschinen, die individuell für einen einzelnen Druckbehältertyp angefertigt werden müssen. Daher sind die Kosten zur Herstellung derartiger Druckbehälter (z.B. Raketentanks) extrem hoch und aufgrund des langen Vorlaufs für die zunächst zu erfolgende Konstruktion und Fertigung der speziellen Schweißanlagen ist ein sehr langer Zeitvorlauf erforderlich, bevor eine auf dem Reißbrett entwickelte Tankkonstruktion in einen ersten Prototyp umgesetzt werden kann.

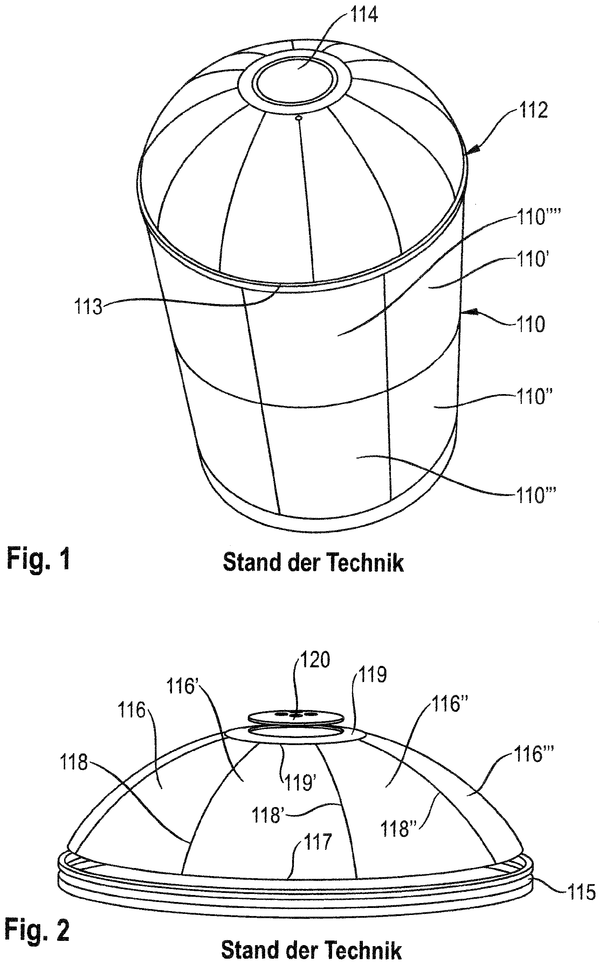

Ein auf derartige herkömmliche Weise hergestellter Raketentank ist in Fig. 1 dargestellt. Erkennbar ist, dass der zylindrische Behälterabschnitt 110 aus einer Vielzahl von gekrümmten Tafeln 110', 110", 110"', 110"" durch Schweißen zusammengesetzt ist. Der zylindrisch Behälterabschnitt 110 ist mit dem Umfangsrand eines gewölbten Behälterbodens 112 verschweißt, wie an der Schweißnaht 113 zu erkennen ist. Der Aufbau des mit einem Mannloch 114 versehenen Behälterbodens 112 ist in Fig. 2 in der Seitenansicht dargestellt. An einem Flanschring 115 (Y-Ring) sind einzelne räumlich gewölbte trapezförmige Bodensegmente 116, 116', 116", 116‴ mit ihrer breiten Basis verschweißt, wie durch die ringförmige Schweißnaht 117 symbolisch dargestellt ist. Auch die einzelnen gewölbten Bodensegmente 116, 116', 116", 116‴ sind an ihren seitlichen Berührungskanten miteinander verschweißt, wie durch die Schweißnähte 118, 118', 118" symbolisch dargestellt ist. An ihrem jeweiligen inneren freien Ende sind die Bodensegmente 116, 116', 116", 116‴ mit einem ringförmigen Mannlochflansch 119 verschweißt, wie es durch die ringförmige Schweißnaht 119' symbolisch dargestellt ist. Ein Deckel 120 ist vorgesehen, um das Mannloch 114 zu verschließen.

### STAND DER TECHNIK

Thermische Spritzverfahren, wie beispielsweise das Kaltgasspritzen, werden üblicherweise zur Beschichtung von Oberflächen verwendet. Ein Kaltgasspritzverfahren zur Beschichtung von Oberflächen, bei welchem das Gas zunächst komprimiert und erwärmt und anschließend durch Entspannen in einer Düse beschleunigt wird, wobei in den Gasstrahl eingeleitete Partikel auf ein vorher aufgeheiztes Substrat geschossen werden, ist aus der DE 10 2006 044 612 A1 bekannt.

Aus der WO 2009/109016 A1 ist es weiterhin bekannt, das Verfahren des Kaltgasspritzens zur Herstellung von Rohren zu verwenden, wobei die später das Rohr bildenden Materialpartikel auf ein Trägerelement aufgespritzt werden, um das Rohr zu erzeugen. Anschließend wir das Trägerelement aus dem Rohr entfernt.

Aus der DE 10 2010 060 362 A1 ist es bekannt, beim Herstellen eines Rohres mittels eines thermischen Spritzverfahrens die Neigung der Spritzdüse, also den Spritzwinkel, relativ zu der zu beschichtenden Oberfläche zu verstellen und dadurch die Haftzugfestigkeit der erzeugten Materialschicht auf deren Untergrund zu verändern. Der Spritzwinkel wird dabei so gewählt, dass eine Haftung entsteht, die ausreicht, damit der Beschichtungswerkstoff an dem Trägerelement haftet, und die gleichzeitig so gering ist, dass das Rohr nach Fertigstellung ohne die Anwendung kostenintensiver Verfahrensschritte leichter vom Trägerelement gelöst werden kann.

Die DE 10 2015 017 026 A1 beschreibt Verfahren zum formwerkzeugfreien Herstellen von Druckbehältern, bei dem der Druckbehälter ganz oder teilweise mittels eines Sinter- oder Pulverdruckverfahrens aus Metall hergestellt wird. Dabei erfolgt ein schichtweises Aufschmelzen von in einem Metallpulvervorrat enthaltenem Metallpulver durch Elektronenstrahlschmelzen oder durch selektives Laserschmelzen. Alternativ wird angegeben, den Druckbehälter mittels Multi-Jet-Modeling aus flüssigem Kunststoffmaterial herzustellen, wobei das formend aus der Düse austretende Kunststoffmaterial unmittelbar nach dem Austritt mittels einer Energiequelle gehärtet wird. Es wird explizit darauf hingewiesen, dass bei diesen Verfahren auf eine Formeinrichtung vollständig verzichtet werden kann.

Die EP 3 333 474 A1 zeigt und beschreibt eine additiv gefertigte Verstärkungsstruktur am Beispiel eines dünnwandigen Behälters, der einen oberen domartigen Deckel, einen unteren domartigen Deckel und einen mittleren zylindrischen Abschnitt aufweist, wobei die Deckel mit dem zylindrischen Abschnitt üblicherweise verschweißt sind. Sowohl die domartigen Deckel als auch der zylindrische Abschnitt bestehen aus einer dünnen Mantelhaut, auf deren Innenseite mittels additiver Fertigung Verstärkungsrippen aufgebracht sind. Die domartigen Deckel können einteilig im 3D-Druck hergestellt werden.

Die US 5 085 343 zeigt einen Tank für ein Weltraumfahrzeug mit zumindest einem domartigen Deckel, dessen Wandung sandwichartig aufgebaut ist und aus einer inneren Wandungshaut, einer äußeren Wandungshaut und einem dazwischen angeordneten Kern aus einem Honigwabenprofil besteht. Die äußere Wandungshaut ist mit einem im Querschnitt Y-förmigen Ring verschweißt.

Die DE 10 2013 216 439 A1 zeigt die Fertigung einer Behälter-Außenhaut mittels eines thermischen Spritzvorgangs. Dabei wird das Spritzmaterial direkt auf eine quer durch eine Wandung eines durch Spritzformen gebildeten Formkörpers verlaufende Schnittfläche aufgetragen. Die Anbindung des durch Spritzformen erzeugten Körpers an einen vorgegebenen Stützkörper erfolgt über eine Verbindungsfläche, die sich zum späteren durch Spritzformen gebildeten Formkörper radial erstreckt. Die Verbindungsfläche zwischen dem zuvor bereitgestellten Stützkörper und dem aufgespritzten Formkörper ist somit deutlich kleiner als bei der erfindungsgemäß am Ausgangskörper im Querschnitt als Schrägfläche ausgebildeten Verbindungsfläche. Dadurch wird beim Verfahren der Erfindung eine deutlich festere Verbindung zwischen dem bereitgestellten ersten Körper und dem daran angespritzten zweiten Körper erzielt.

### DARSTELLUNG DER ERFINDUNG

Aufgabe der vorliegenden Erfindung ist es daher, ein Verfahren anzugeben, mit dem ein einen Leichtbau-Drucktank bildender Leichtbau-Druckbehälter schneller und kostengünstiger herstellbar ist.

Diese Aufgabe wird gelöst durch ein Verfahren mit den Merkmalen der Ansprüche 1 sowie 3.

Bei einem Verfahren zur Herstellung eines einen Leichtbau-Drucktank bildenden Leichtbau-Druckbehälters aus einem Metallmaterial, insbesondere eines Satelliten-, Raumfahrzeug- oder Raketentanks, mit zwei gewölbten Behälterböden, wobei die gewölbten Behälterböden miteinander oder mit zumindest einem zylindrischen Behälterabschnitt verbunden oder integral ausgebildet sind, wird erfindungsgemäß zumindest einer der Behälterböden zumindest teilweise durch additive Fertigung mittels eines thermischen Spritzverfahrens nahtlos hergestellt, wobei das Metallmaterial mittels zumindest einer Spritzdüse als Spritzstrahl auf eine Oberfläche zumindest einer Schalungsform aufgetragen wird und wobei die die Herstellung des jeweiligen gewölbten Behälterbodens mit den folgenden Schritten erfolgt:
a) Bereitstellen eines im Querschnitt y-förmigen Ringkörpers mit einer zylindrischen Außenwand und einer von dieser unter einem spitzen Winkel radial schräg nach innen verlaufenden Krempe mit einem radial inneren Umfangsrand, wobei sich die Wandstärke der Krempe zum radial inneren Umfangsrand hin verjüngt, wodurch am freien Ende der Krempe ein im Querschnitt schräg verlaufener Wandabschnitt als Fase ausgebildet ist,
b) Bereitstellen einer gewölbten Schalungsform, die eine konkav oder konvex gewölbte Formoberfläche aufweist,
c) Aufsetzen des im Querschnitt y-förmigen Ringkörpers auf den Rand der gewölbten Schalungsform derart, dass die Krempe des Ringkörpers auf der gewölbten Formoberfläche aufliegt und deren Rand bedeckt, wobei der die Fase bildende schräg verlaufende Wandabschnitt der Krempe von der Formoberfläche weg weist,
d) Auftragen des Metallmaterials durch einen Spritzstrahl mittels zumindest einer Spritzdüse gemäß dem thermischen Spritzverfahren auf den schräg verlaufenden Wandabschnitt des Ringkörpers und auf die Formoberfläche der gewölbten Schalungsform zur Bildung eines sich nahtlos an die Krempe anschließenden und mit dieser integral ausgebildeten zentralen, gewölbten Domabschnitts und
e) Entnehmen der den Behälterboden bildenden Einheit aus Domabschnitt und Ringkörper aus der gewölbten Schalungsform.

Das Auftragen des Metallmaterials durch den Spritzstrahl mittels der zumindest einen Spritzdüse auf die Formoberfläche der Schalungsform kann bei allen Varianten des erfindungsgemäßen Verfahrens in einem einzigen Arbeitsgang oder vorzugsweise in mehreren konsekutiven Arbeitsgängen bevorzugt schichtweise erfolgen. Die Dicke der jeweils aufgesprühten Metallmaterialschicht ist dabei abhängig von der Bewegungsgeschwindigkeit der Spritzvorrichtung.

Insbesondere erfolgt die Herstellung mittels eines Kaltgasspritzverfahrens.

Dabei kann der betreffende Behälterboden, bestehend aus dem Domabschnitt und einem an dessen freiem Umfangsrand vorgesehenen Ringkörper, der einen zylindrischen Ringabschnitt aufweist, welcher später zur Befestigung des Leichtbau-Druckbehälters dient, integral, also einstückig, mittels des thermischen Spritzverfahrens nahtlos hergestellt werden. Es ist aber alternativ auch vorgesehen, zunächst den Ringkörper oder zunächst den Domabschnitt mittels des thermischen Spritzverfahrens herzustellen und dann daran jeweils das andere Element (Domabschnitt beziehungsweise Ringkörper) mittels des thermischen Spritzverfahrens anzuformen. Auch kann der Ringkörper vorab auf herkömmliche Weise (zum Beispiel umformend oder spanabhebend, durch Schmieden, Drehen oder Fräsen) unter Ausbildung des Wandabschnitts mit sich im Querschnitt zum freien Umfangsrand hin verringernder Wandstärke am entsprechenden Umfangsrandbereich gefertigt werden und dann kann der Domabschnitt mittels des thermischen Spritzverfahrens daran angeformt werden.

Weiterhin ist es auch von der Erfindung mit umfasst, zunächst nur Segmente des Domabschnitts mittels des thermischen Spritzverfahrens zu fertigen, die dann beispielsweise auf herkömmliche Weise (zum Beispiel durch Schweißen) miteinander zum Domabschnitt zusammengefügt werden. An den so gebildeten Domabschnitt kann dann entweder ein auf herkömmliche Weise vorgefertigter Ringkörper angeschweißt werden oder der auf diese Weise gebildete Domabschnitt wird an seinem Außenumfang mit einem Umfangsbereich versehen, dessen Wandabschnitt eine sich im Querschnitt zum freien Umfangsrand hin verringernde Wandstärke aufweist, und der Ringkörper wird daran mittels des thermischen Spritzverfahrens angeformt.

Welche der vorstehenden Fertigungsmethoden angewendet wird, kann beispielsweise in Abhängigkeit von der Größe des Leichtbau-Druckbehälters entschieden werden.

### VORTEILE

Durch die erfindungsgemäße additive Fertigung zumindest der Behälterböden können diese bislang in komplizierten Fertigungsschritten aus einer Vielzahl von Elementen hergestellten Druckbehälterkomponenten jeweils in einem Stück als integrales Bauteil bedarfsgerecht hergestellt werden. Es werden keine bauteilspezifischen, im Sondermaschinenbau herzustellenden Fertigungsmaschinen, wie beispielsweise spezielle Schweißanlagen, mehr benötigt, so dass die für das Verfahren der Erfindung benötigten Fertigungsmaschinen von der Geometrie und dem Durchmesser des zu fertigenden Druckbehälters unabhängig sind. Die herkömmlicherweise für den Sondermaschinenbau erforderlichen Kosten und der Zeitvorlauf für die Herstellung dieser Sondermaschinen fallen beim erfindungsgemäßen Verfahren nicht mehr an. Sowohl die Herstellungskosten als auch die für die Herstellung benötigte Zeit sind somit beim Verfahren der Erfindung gegenüber dem Stand der Technik deutlich verringert. Selbst bei einer modularen Bauweise, bei der nur Teile, zum Beispiel nur Segmente des Domabschnitts des Behälterbodens, in additiver Fertigung hergestellt werden, kann ein Kosten- und Zeitvorteil entstehen. Der Ringkörper kann vorab mittels des thermischen Spritzverfahrens oder aber auf herkömmliche Weise durch Umformen (zum Beispiel Gießen, Schmieden oder Walzen) oder durch spanabhebende Bearbeitung (zum Beispiel durch Drehen oder Fräsen) hergestellt werden, wobei dann, in der Regel in einem mechanischen Bearbeitungsschritt, im entsprechenden Umfangsbereich der Wandabschnitt mit sich im Querschnitt zum freien Umfangsrand hin abnehmender Wandstärke ausgebildet wird, an den dann mittels des thermischen Spritzverfahrens der Domabschnitt angeformt wird.

Weitere bevorzugte und vorteilhafte Ausgestaltungsmerkmale des erfindungsgemäßen Verfahrens sind Gegenstand der Unteransprüche 2, 4 bis 13.

Dabei ist es besonders von Vorteil, wenn die Bereitstellung des im Querschnitt y-förmigen Ringkörpers mit den folgenden Schritten erfolgt:
a1) Bereitstellen einer Ringkörper-Schalungsform als Außenschalung oder als Innenschalung,
a2) Auftragen des Metallmaterials durch einen Spritzstrahl mittels zumindest einer Spritzdüse gemäß dem thermischen Spritzverfahren auf die Oberfläche am Innenumfang oder am Außenumfang der Ringkörper-Schalungsform mit einem sich in einer Richtung parallel zur Ringachse verringernden Innendurchmesser zur Bildung eines ringförmigen Rohlings,
a3) Bearbeiten des ringförmigen Rohlings derart, dass ein im Querschnitt y-förmiger Ringkörper mit einer zylindrischen Außenwand und einer von dieser unter einem spitzen Winkel radial schräg nach innen verlaufenden Krempe entsteht,
a4) Bearbeiten des radial inneren Umfangsrands der Krempe derart, dass sich die Wandstärke der Krempe zum radial inneren Umfangsrand hin verjüngt, wodurch am freien Ende der Krempe der im Querschnitt schräg verlaufene Wandabschnitt als Fase ausgebildet wird, und
a5) Entnehmen des y-förmigen Ringkörpers aus der ersten Schalungsform.

Auf diese Weise wird auch der Ringkörper mittels des thermischen Spritzverfahrens erzeugt und es ergibt sich schließlich ein den Ringkörper mit dem Domabschnitt integrierender monolithisch ausgebildeter Behälterboden.

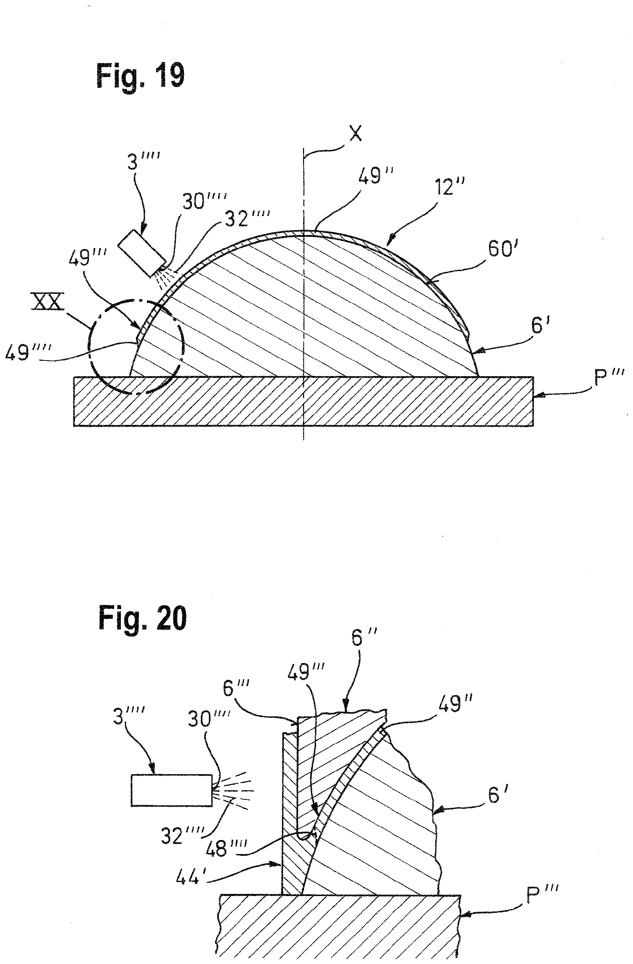

Die Herstellung des Ringkörpers ist jedoch nicht auf die hier beschriebene Vorgangsweise der additiven Fertigung mit anschließender umfangreicher mechanischer Bearbeitung des Roh-Ringkörpers beschränkt. An Stelle des Schrittes a3) kann im Schritt a2) auch ein ringförmiger Formkern (ähnlich dem Formkern 6", der weiter unten in Bezug auf Fig. 20 beschrieben ist) beim Auftragen des Metallmaterials vorgesehen sein, der den Raum zwischen den Schenkeln des Winkels α ausfüllt, wodurch im Schritt a3) keine oder weniger mechanische Nacharbeit, nämlich nur noch eine geringfügige Oberflächenbearbeitung erforderlich ist.

Bei einem alternativen Verfahren zur Herstellung eines einen Leichtbau-Drucktank bildenden Leichtbau-Druckbehälters aus einem Metallmaterial mit zwei gewölbten Behälterböden, wobei die gewölbten Behälterböden miteinander oder mit zumindest einem zylindrischen Behälterabschnitt verbunden oder integral ausgebildet sind, ist vorgesehen, dass zumindest einer der Behälterböden zumindest teilweise durch additive Fertigung mittels eines thermischen Spritzverfahrens nahtlos hergestellt wird, wobei das Metallmaterial mittels zumindest einer Spritzdüse als Spritzstrahl auf eine Oberfläche zumindest einer Schalungsform aufgetragen wird. Hier erfolgt die Herstellung des jeweiligen gewölbten Behälterbodens mit den folgenden Schritten:
a') Bereitstellen einer gewölbten Schalungsform, die eine konkav oder konvex gewölbte Formoberfläche aufweist,
b') Auftragen des Metallmaterials durch einen Spritzstrahl mittels zumindest einer Spritzdüse gemäß dem thermischen Spritzverfahren auf die Formoberfläche der gewölbten Schalungsform zur Bildung eines gewölbten Domabschnitts;
c') Ausbilden des Umfangsrandbereichs des gewölbten Domabschnitts auf der von der Formoberfläche abgewandten Seite derart, dass sich dessen Wandstärke zum freien Umfangsrand hin verjüngt, wodurch auf der von der Formoberfläche abgewandten Seite des Umfangsrandbereichs ein im Querschnitt schräg verlaufener Wandabschnitt als Fase ausgebildet wird;
d') Anformen eines Ringkörpers an den Umfangsrandbereich des Domabschnitts durch Auftragen des Metallmaterials durch einen Spritzstrahl mittels zumindest einer Spritzdüse gemäß dem thermischen Spritzverfahren auf den im Querschnitt schräg verlaufenden Wandabschnitt des Domabschnitts und auf eine Formoberfläche einer weiteren Schalungsform für den Ringkörper und
i) Entnehmen der den Behälterboden bildenden Einheit aus Domabschnitt und Ringkörper aus der jeweiligen Schalungsform.

Bei dieser Variante wird zunächst der Domabschnitt mittels des thermischen Spritzens gefertigt und dann wird an den Domabschnitt der Ringkörper ebenfalls mittels thermischen Spritzens angeformt. Der im Querschnitt schräg verlaufende Wandabschnitt kann vor dem Anformen des Ringkörpers mechanisch bearbeitet werden, er kann aber auch unbearbeitet bleiben und das Anformen des Ringkörpers kann auf die unbearbeitete Oberfläche des im Querschnitt schräg verlaufenden Wandabschnitts erfolgen. Der Ringkörper kann als im Querschnitt y-förmiger Ringkörper ausgebildet werden, er kann aber auch als zylindrischer Ringkörper (in Form eines Zylindermantels) ausgebildet werden, was abhängig davon ist, an welcher Stelle des Randes des Domabschnitts der Ringkörper angeformt wird.

Somit ist es von der Erfindung auch mit umfasst, zunächst die gewölbten Domabschnitte zu fertigen und den ringförmigen Rohling zur Herstellung des (vorzugsweise y-förmigen) Ringkörpers an einem schräg verlaufenden Umfangswandabschnitt des Domabschnitts anzuformen und anschließend mechanisch zu bearbeiten. Die Domabschnitte können alternativ durch Auftragen des Metallmaterials auf eine konvex oder eine konkav gekrümmte Schalungsform gebildet werden.

Mit den vorgenannten alternativen Verfahrensausgestaltungen lassen sich die gewölbten Behälterböden, beispielsweise als Tankböden eines Raumfahrzeugtanks, schnell und präzise sequentiell fertigen, wodurch eine hohe Auslastung der zur Fertigung erforderlichen Maschinen ermöglicht wird. Das (vorzugsweise schichtweise) Auftragen des Metallmaterials mittels der Spritzdüse(n) auch auf den schräg verlaufenden Wandabschnitt der Krempe des Ringkörpers beziehungsweise des entsprechend ausgebildeten Umfangsrandbereichs des Domabschnitts schafft eine integrale Verbindung des Ringkörpers mit dem gewölbten Domabschnitt, so dass ein einheitliches, im Idealfall, wenn beide Teile mittels thermischen Spritzens erzeugt werden, monolithisches Werkstück als Behälterboden ohne Trennfuge und damit ohne Schwachstelle gebildet wird.

Von besonderem Vorteil ist es, wenn vor der Bildung des gewölbten Domabschnitts ein vorgefertigter Mannlochflansch, der im Bereich seines Außenumfangs einen ringförmigen, im Querschnitt schräg verlaufenden Wandabschnitt aufweist, wodurch sich die Wand des Mannlochflansches zum Außenumfangsrand des Mannlochflansches hin verjüngt, derart in eine Ausnehmung der gewölbten Schalungsform eingelegt wird, dass der schräg verlaufende Wandabschnitt von der Formoberfläche weg weist, und wenn bei der Bildung des gewölbten Domabschnitts das Metallmaterial auch auf den schräg verlaufenden Wandungsabschnitt des Mannlochflansches aufgetragen wird, um diesen integral in den Domabschnitt einzuformen. Dazu weist die Schalungsform für den gewölbten Domabschnitt eine zentrale Ausnehmung zur Aufnahme eines Mannlochflansches auf und der Mannlochflansch weist im Bereich seines Außenumfangs einen ringförmigen, im Querschnitt schräg verlaufenden Wandabschnitt auf, wodurch sich die Wand des Mannlochflansches zum Außenumfangsrand des Mannlochflansches hin verjüngt, so dass der schräg verlaufende Wandabschnitt als Fase ausgebildet ist. Der Mannlochflansch wird dann derart in die Ausnehmung der Schalungsform für den gewölbten Domabschnitt eingelegt, dass der schräg verlaufende Wandabschnitt von der Formoberfläche weg weist. Der Mannlochflansch kann mittels thermischen Spritzens erzeugt werden, er kann aber auch auf herkömmliche Weise hergestellt werden, beispielsweise durch Umformen (zum Beispiel Gießen, Schmieden oder Walzen) oder durch spanabhebende Bearbeitung (zum Beispiel durch Drehen oder Fräsen) hergestellt werden.

Bei der Ausbildung des Domabschnitts wird dann das Metallmaterial auch auf den schräg verlaufenden Wandungsabschnitt des Mannlochflansches aufgetragen, um diesen integral in den Domabschnitt einzuformen. Auch hier entsteht durch das (bevorzugt schichtweise) Auftragen des Metallmaterials mittels der Spritzdüse(n) auch auf den schräg verlaufenden Wandabschnitt des Mannlochflansches eine integrale Einbindung des Mannlochflansches in das Materialgefüge des Domabschnitts, so dass auch hier ein einheitliches Werkstück ohne Trennfuge und damit ohne Schwachstelle gebildet wird. Wenn auch der Mannlochflansch mittels thermischen Spritzens hergestellt worden ist, wird eine monolithische Anbindung des Mannlochflansches an den Domabschnitt erzielt.

Besonders bevorzugt ist eine Weiterbildung des erfindungsgemäßen Verfahrens, gemäß der charakteristische Eigenschaften des Spritzstrahls der zumindest einen Spritzdüse geändert werden, wenn dieser vom schräg verlaufenden Wandabschnitt der Krempe beziehungsweise des Domabschnitts beziehungsweise des Mannlochflansches weiter wandert und auf die Formoberfläche auftrifft, auf der noch kein Material mittels des thermischen Spritzverfahrens aufgetragen worden ist, und gemäß der die charakteristischen Eigenschaften des Spritzstrahls wieder zurückgeändert werden, wenn dieser von der Formoberfläche, auf der noch kein Material mittels des thermischen Spritzverfahrens aufgetragen worden war, weiter wandert und auf den schräg verlaufenden Wandabschnitt des Mannlochflansches beziehungsweise der Krempe beziehungsweise des Domabschnitts auftrifft. Durch diese Änderung von charakteristischen Eigenschaften des Spritzstrahls, beispielsweise der Auftreffgeschwindigkeit der Metallmaterial-Partikel und/oder des Auftreffwinkels auf den Untergrund, wird erreicht, dass im Bereich des jeweiligen schräg verlaufenden Wandabschnitts eine feste und innige Materialanbindung an den hier vom Material des schräg verlaufenden Wandabschnitts gebildeten Untergrund erfolgt, während dort, wo der Spritzstrahl auf die Formoberfläche auftrifft, von der das Werkstück, also der Behälterboden, später wieder gelöst werden muss, keine feste und innige Materialanbindung an den hier vom Material der Formoberfläche oder eines darauf befindlichen Trennmittels gebildeten Untergrund erfolgt, um den fertigen Behälterboden leichter aus der Schalungsform entnehmen zu können.

Vorzugsweise wird nach dem Entnehmen des Behälterbodens eine Oberflächenbearbeitung und/oder eine thermische Behandlung des Behälterbodens, insbesondere des zentralen gewölbten Domabschnitts, durchgeführt. Eine solche Oberflächenbehandlung kann beispielsweise der Oberflächenverdichtung oder der Oberflächenhärtung (z.B. durch Kugelstrahlen) dienen. Vorteilhaft ist es auch, wenn durch die thermische Behandlung in dem mittels der erfindungsgemäßen additiven Fertigung erzeugten Werkstück Gefügeänderungen des Metallmaterials vorgenommen werden können, die beispielsweise die Zähigkeit des Materials verändern und das Werkstück elastischer machen.

Bei einer weiteren bevorzugten Ausführungsform des jeweiligen erfindungsgemäßen Verfahrens, die mit anderen Ausführungsformen kombinierbar ist und bei der die gewölbten Behälterböden mit zumindest einem zylindrischen Behälterabschnitt verbunden oder integral damit ausgebildet sind, erfolgt die Herstellung des zumindest einen zylindrischen Behälterabschnitts mit den folgenden Schritten:
a") Bereitstellen einer dritten, zylindrischen Schalungsform,
b") Auftragen des Metallmaterials auf die Innenfläche oder die Außenfläche der dritten, zylindrischen Schalungsform zur Bildung einer zylindrischen Behälterhaut,
c") lokales Auftragen des Metallmaterials durch einen Spritzstrahl mittels der zumindest einen Spritzdüse auf die Innenfläche beziehungsweise die Außenfläche der zylindrischen Behälterhaut zur Erzeugung einer mit der Zylinderhaut integral ausgebildeten, Rippen aufweisenden Versteifungsstruktur zur Bildung eines zylindrischen Rohrkörpers,
d") Entnehmen des den zylindrischen Behälterabschnitt bildenden bearbeiteten zylindrischen Rohrkörpers aus der dritten Schalungsform.

Auch für die additive Herstellung des zylindrischen Behälterabschnitts treffen die gleichen Vorteile zu wie für die Herstellung der Behälterböden mittels des erfindungsgemäßen Verfahrens. Gegenüber der an sich bereits bekannten additiven Herstellung von Rohren wird erfindungsgemäß in einem ersten additiven Herstellungsschritt nur eine als Zylinderhaut bezeichnete sehr dünne Wandung erzeugt, auf die dann in einem zweiten Fertigungsschritt eine Rippen aufweisende Versteifungsstruktur lokal additiv aufgetragen wird, so dass sich ein integrales Zylindergebilde aus Zylinderhaut und Versteifungsstruktur ergibt, wobei zwischen der Zylinderhaut und der Versteifungsstruktur eine feste und innige gegenseitige Materialanbindung besteht und so ein einheitliches, integrales Werkstück ohne Trennfuge und damit ohne Schwachstelle gebildet wird. Der zylindrische Behälterabschnitt kann grundsätzlich durch vorzugsweise schichtweises Auftragen des Metallmaterials auf die Innenumfangsfläche oder die Außenumfangsfläche einer zylindrischen Schalungsform hergestellt werden, wobei die Versteifungsstruktur auf der Innenseite beziehungsweise der Außenseite der zunächst entstehenden Zylinderhaut aufgebaut wird. Eine solche Versteifungsstruktur wird durch integral mit der Zylinderhaut ausgebildete Rippen geschaffen.

Dabei ist es von Vorteil, wenn nach dem Schritt c") noch zumindest einer der folgenden Schritte durchgeführt wird:
c"1) Planen der radial inneren Flächen der Versteifungsstruktur mittels mechanischer Bearbeitung,
   und/oder
c"2) Planen der seitlichen Flächen der Versteifungsstruktur mittels mechanischer Bearbeitung.

Durch zumindest einen dieser mechanischen Bearbeitungsschritte wird unnötiges Material von den Rippen abgetragen und die Masse des zylindrischen Rohrkörpers wird verringert und dadurch optimiert. Die Durchführung dieser mechanischen Bearbeitungsschritte des zylindrischen Rohrkörpers noch in oder an der dritten Schalungsform ist deswegen vorteilhaft, weil die bei der mechanischen Bearbeitung auf den zylindrischen Rohrkörper Kräfte einwirken, die großflächig über die dritte Schalungsform abgestützt werden, so dass der zylindrische Rohrkörper keiner Verformung durch die mechanische Bearbeitung unterliegt.

Vorzugsweise wird die Versteifungsstruktur in Form eines Orthogrids, also in Form eines Gitters mit im rechten Winkel zueinander verlaufenden Längsrippen und Spanten ausgebildet, aber auch Gitterstrukturen mit anderen Winkeln, zum Beispiel rautenförmige Versteifungsstrukturen, sind von der Erfindung umfasst.

Vorzugsweise weist die als Orthogrid gestaltete Versteifungsstruktur parallel zur Zylinderachse verlaufende und in Umfangsrichtung voneinander beabstandete Längsrippen sowie in Umfangsrichtung verlaufende und in Axialrichtung voneinander beabstandete Spanten auf.

Von Vorteil ist auch eine alternative Ausführungsform, bei der die Versteifungsstruktur in Form eines Isogrids ausgebildet wird.

Vorteilhafterweise wird nach dem Schritt d") eine Oberflächenbearbeitung des zylindrischen Behälterabschnitts durchgeführt. Hier treffen dieselben Vorteile zu wie für den entsprechenden Bearbeitungsschritt des Behälterbodens.

Ebenfalls von Vorteil ist es, wenn nach dem Schritt d") eine thermische Behandlung des zylindrischen Behälterabschnitts durchgeführt wird. Auch hier treffen dieselben Vorteile zu wie für den entsprechenden Bearbeitungsschritt des Behälterbodens.

Bei einer vorzugsweisen Ausführungsform des Verfahrens gemäß der Erfindung werden der zumindest eine zylindrische Behälterabschnitt und die beiden Behälterböden separat voneinander mittels des thermischen Spritzverfahrens nahtlos hergestellt und anschließend zusammengefügt. Beispielsweise wird der zylindrische Behälterabschnitt mit dem jeweiligen Behälterboden verschweißt. Es können auch mehrere zylindrische Behälterabschnitte miteinander zu einer Zylinderröhre verschweißt werden, die dann mit den Behälterböden verschweißt wird. Alternativ ist eine Flanschverbindung möglich.

Bei einer alternativen vorteilhaften Ausführungsform werden der zumindest eine zylindrische Behälterabschnitt und zumindest einer der beiden Behälterböden integral mittels des thermischen Spritzverfahrens nahtlos hergestellt. Bei einer solchen additiven Fertigung wird zuerst ein Behälterboden, wie beschrieben, hergestellt, wobei der ringförmige Anbindungsrand des Behälterbodens in derselben Weise als schräg verlaufender Wandabschnitt ausgebildet ist, wie dies bereits oben in Verbindung mit der Krempe des y-förmigen Ringkörpers beschrieben worden ist, und wobei der zylindrische Behälterabschnitt ausgehend von diesem schräg verlaufenden Randabschnitt durch additive Fertigung gebildet wird, wie dies bereits vorstehend für den separat hergestellten zylindrischen Behälterabschnitt beschrieben worden ist. Ist einer der Behälterböden mit einem Mannloch versehen, so lässt sich der zylindrische Behälterabschnitt auch zwischen zwei bereits vorhandenen Behälterböden durch die erfindungsgemäße additive Fertigung nahtlos einformen, wenn die Spritzdüse und andere Bearbeitungswerkzeuge durch das Mannloch in den Innenraum der zylindrischen Schalungsform eingebracht werden.

Bei einer alternativen Variante des Verfahrens werden die beiden gewölbten Behälterböden durch additive Fertigung mittels des thermischen Spritzverfahrens als integraler, vorzugsweise kugelförmiger oder kugelähnlicher, Raumkörper durch Auftragen des Metallmaterials durch einen Spritzstrahl mittels zumindest einer Spritzdüse auf die Außenoberfläche einer zunächst bereitgestellten vierten Schalungsform nahtlos hergestellt. Die Schalungsform, die in diesem Fall als so genannte "verlorene Schalung" ausgebildet ist, wird anschließend durch zumindest eine im entstandenen Raumkörper vorgesehene Öffnung aus dem Inneren des Raumkörpers entfernt, beispielsweise herausgeschmolzen oder herausgebrochen. Auf diese Weise lassen sich mit dem erfindungsgemäßen Verfahren zum Beispiel kugelförmige oder kugelartige Leichtbau-Druckbehälter fertigen, wie sie zum Beispiel als Satellitentanks Verwendung finden.

Auch wenn vorstehend als Beispiel ein Satelliten-, Raumfahrzeug- oder Raketentank als Anwendung für einen Leichtbau-Druckbehälter genannt wird so ist die Erfindung nicht darauf beschränkt. Ein Leichtbau-Druckbehälter kann für viele andere Zwecke eingesetzt werden, bei denen das Gewicht des Drucktanks niedrig gehalten werden muss, beispielsweise als Gas- oder Wasserstofftank in einem Kraftfahrzeug oder einem Schienenfahrzeug, einem Luftfahrzeug oder einem Wasserfahrzeug. Auch ein stationärer Einsatz des Leichtbau-Druckbehälters ist von der Erfindung mit umfasst Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: einen herkömmlichen Raketentank,
- Fig. 2: einen sphärischen Behälterboden eines herkömmlichen Raketentanks,
- Fig. 3: eine bereitgestellte erste, zylindrische Schalungsform zur Durchführung des erfindungsgemäßen Verfahrens (Schritt a1),
- Fig. 4: den Schritt des Auftragens von Metallmaterial auf die erste, zylindrische Schalungsform zur Erzeugung eines ringförmigen Rohlings (Schritt a2),
- Fig. 4A: die Einzelheit IV aus Fig. 4,
- Fig. 5: den Schritt der mechanischen Bearbeitung des ringförmigen Rohlings (Schritt a3 und a4),
- Fig. 5A: die Einzelheit V aus Fig. 5,
- Fig. 6: das Entnehmen des Ringkörpers aus der ersten, zylindrischen Schalungsform (Schritt a5),
- Fig. 7: das Aufsetzen des Ringkörpers auf eine zweite, konkav gewölbte Schalungsform (Schritt c),
- Fig. 8: das Auftragen des Metallmaterials auf die zweite Schalungsform (Schritt d),
- Fig. 9: einen Ausschnitt aus dem so gebildeten Behälterboden gemäß Einzelheit IX aus Fig. 8,
- Fig. 10: das Entnehmen des Behälterbodens aus der zweiten Schalungsform (Schritt e),
- Fig. 11: das Auftragen des Metallmaterials auf die Innenseite einer dritten, zylindrischen Schalungsform zur Bildung einer zylindrischen Behälterhaut (Schritt b"),
- Fig. 12: das Auftragen des Metallmaterials auf die Innenseite der Zylinderhaut zur Ausbildung eines zylindrischen Rohrkörpers mit einer Versteifungsstruktur aus Spanten und Längsrippen auf der Innenseite der zylindrischen Behälterhaut (Schritt c"),
- Fig. 12A: eine vergrößerte Ausschnitt-Darstellung des oberen Randes des zylindrischen Rohrkörpers aus Fig. 12,
- Fig. 12B: den Schritt gemäß Fig. 12 in vergrößerter Darstellung,
- Fig. 13: den Schritt des mechanischen Bearbeitens der Spanten und Längsrippen (Schritt c"1),
- Fig. 13A: den Verfahrensschritt aus Fig. 13 in vergrößerter Darstellung,
- Fig. 14: den Verfahrensschritt der mechanischen Bearbeitung der zwischen den Längsrippen und Spanten gebildeten Taschen (Schritt c"2),
- Fig. 14A: den Verfahrensschritt der Fig. 14 in vergrößerter Darstellung,
- Fig. 15: das Entnehmen des fertigen zylindrischen Behälterabschnitts aus der dritten Schalungsform (Schritt d"),
- Fig. 16: einen teilweise geschnittenen zylinderartigen Leichtbau-Druckbehälter gemäß der Erfindung,
- Fig. 17: einen teilweise geschnittenen kugelartigen Leichtbau-Druckbehälter gemäß einer alternativen Ausführungsform der Erfindung,
- Fig. 18: eine alternative Versteifungsstruktur in Form eines Isogrids,
- Fig. 19: eine alternative Ausführungsform zur Herstellung des Behälterbodens auf einer konvexen Schalungsform (Schritt b') und
- Fig. 20: einen Ausschnitt aus Fig. 19 gemäß der Einzelheit XX beim Anformen des Ringkörpers gemäß Schritt d'.

### DARSTELLUNG VON BEVORZUGTEN AUSFÜHRUNGSBEISPIELEN

Die Fig. 1 und 2 zeigen, wie bereits eingangs ausgeführt worden ist, einen auf herkömmliche Weise hergestellten Raketentank.

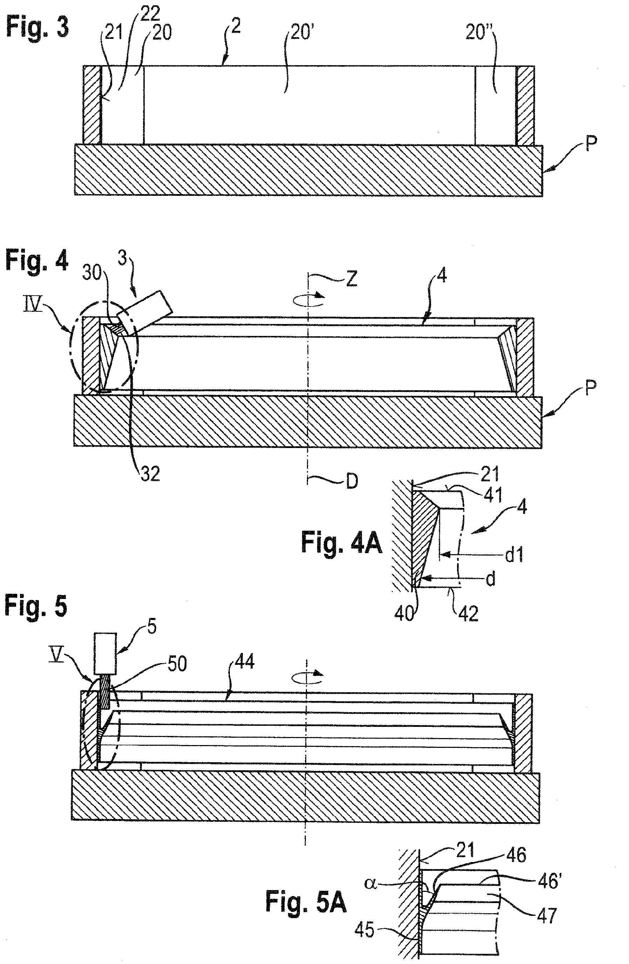

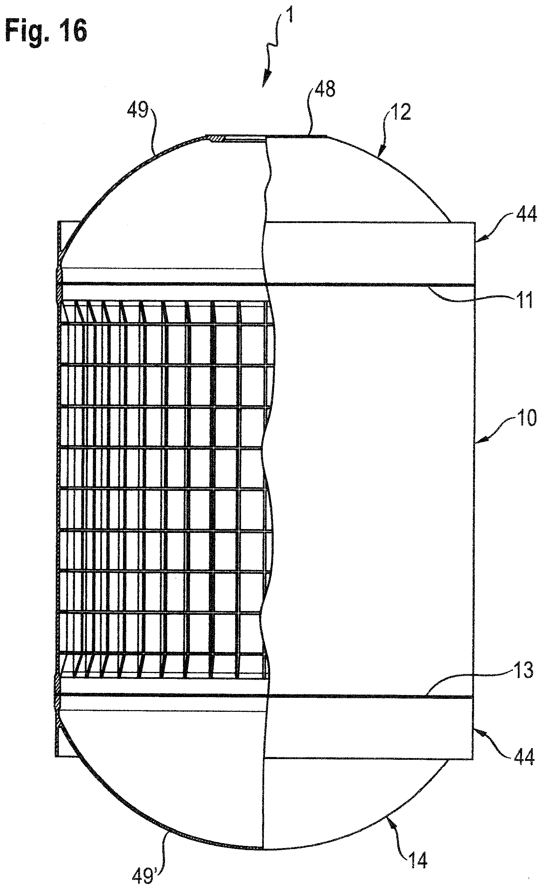

Die Herstellung des in Fig. 16 gezeigten Leichtbau-Druckbehälters 1, beispielsweise eines Raketentanks, mit einem zylindrischen Behälterabschnitt 10, einem oberen gewölbten Behälterboden 12 und einem unteren gewölbten Behälterboden 14 aus einem Metallmaterial durch additive Fertigung mittels eines thermischen Spritzverfahrens, insbesondere mittels eines Kaltgasspritzverfahrens, wird nachstehend anhand der Fig. 3 bis 15 beschrieben.

In Fig. 3 ist eine erste, zylindrische Schalungsform 2 gezeigt, die auf einer Arbeitsplattform P liegt. Auf die Oberfläche 21 am Innenumfang, also die Innenumfangsfläche, der ersten, zylindrischen Schalungsform 2 ist bereits eine Trennschicht 22 aufgebracht worden, die beispielsweise aus einem Trennmittel besteht, das ein späteres leichtes Ablösen der Schalungsform 2 von einem erzeugten Werkstück ermöglicht. Wie in Fig. 3 zu erkennen ist, besteht die erste, zylindrische Schalungsform 2 aus mehreren Zylindersegmenten, von denen in Fig. 3 die Segmente 20, 20' und 20" gezeigt sind. Diese Segmente erleichtern später das Ablösen der Schalungsform 2 von einem erzeugten Werkstück.

In Fig. 4 ist gezeigt, wie eine thermische Spritzvorrichtung 3 im Inneren vor der Innenumfangsfläche der ersten zylindrischen Schalungsform 2 positioniert ist und gemäß Schritt b) arbeitet. Diese Spritzvorrichtung 3 kann beispielsweise an einem Roboterarm angebracht sein.

Aus einer Spritzdüse 30 der thermischen Spritzvorrichtung 3 tritt ein Spritzstrahl 32 aus, der auf die Oberfläche 21 am Innenumfang der ersten, zylindrischen Schalungsform 2 gerichtet ist. Der Spritzstrahl 32 besteht aus einem Hochgeschwindigkeits-Gasstrahl, dem in der Spritzvorrichtung 3 Partikel eines Metallmaterials zugeführt werden. Der Gasstrahl mit den darin enthaltenen Metallpartikeln wird in bekannter Weise mittels einer Laval-Düse auf vorzugsweise Überschallgeschwindigkeit beschleunigt, so dass die Metallpartikel mit einer sehr hohen kinetischen Energie auf die Oberfläche 21 am Innenumfang beziehungsweise auf die dort vorgesehene Trennmittelschicht 22 auftreffen. Durch Bewegung der die Spritzdüse 30 aufweisenden Spritzvorrichtung 3 in Richtung parallel zur Zylinderachse Z der zylindrischen Schalungsform und gegebenenfalls auch in Umfangsrichtung und durch gleichzeitige Rotation der Bearbeitungsplattform P um eine mit der Zylinderachse Z koaxiale Drehachse D wird bevorzugt schichtweise ein im Wesentlichen homogener Materialauftrag des Metallmaterials auf der Oberfläche 21 am Innenumfang der ersten, zylindrischen Schalungsform 2 erhalten, wie es in Fig. 4 dargestellt ist, wodurch ein ringförmiger Rohling 4 erhalten wird.

Dieser ringförmige Rohling 4 weist, vertikal geschnitten betrachtet, eine pentagonförmige Form auf, wie es in Fig. 4A vergrößert dargestellt ist. Ein der Oberfläche 21 am Innenumfang der ersten, zylindrischen Schalungsform 2 benachbarter Abschnitt des Rohlings 4 ist über die Axialerstreckung des Rohlings 4 an beiden axialen Stirnflächen 41, 42 des Rohlings 4 gleich dick. Von diesen beiden Stirnflächen 41, 42 gleicher Wandstärke verringert sich der Innendurchmesser d des ringförmigen Rohlings 4 hin zu einem engsten Innendurchmesser d₁, der bezüglich der Axialerstreckung des Rohlings 4 asymmetrisch (etwa 20:80 % der Axialerstreckung des Rohlings 4) gelegen ist.

In Fig. 5 ist dargestellt, wie in den Verfahrensschritten c) und d) der ringförmige Rohling 4 mechanisch bearbeitet wird, beispielsweise mit einer ein rotierendes Fräswerkzeug 50 aufweisenden Fräse 5. Zur Durchführung der mechanischen Bearbeitung des ringförmigen Rohlings 4 und des y-förmigen Ringkörpers 44 wird der Rohling 4 vor Beginn der mechanischen Bearbeitung in der ersten, zylindrischen Schalungsform 2 auf dem Fachmann bekannte Weise fixiert.

Durch diese mechanische spanabhebende und bei Bedarf auch schleifende Bearbeitung des Rohlings 4 und der dabei entstehenden Flächen wird zunächst im Schritt c) ein Ringkörper 44 erzeugt, dessen Wandung im Querschnitt y-förmig ist, wie es in Fig. 5A vergrößert dargestellt ist. Dieser im Querschnitt y-förmige Ringkörper 44 weist eine zylindrische Außenwand 45 sowie eine von dieser zylindrischen Außenwand 45 unter einem spitzen Winkel α radial schräg nach innen verlaufende Krempe 46 auf. Diese Krempe 46 ist ein unter dem spitzen Winkel α radial schräg nach innen verlaufender Wandungsabschnitt, der in einem Bogen in die zylindrische Außenwand 45 des Ringkörpers 44 übergeht.

Der radial innere Umfangsrand 46' der Krempe 46 wird dann im Schritt d) mittels beispielsweise des Fräswerkzeugs 50 des Fräsers 5 derart bearbeitet, dass sich die Wandstärke der Krempe 46 zum radial inneren Umfangsrand 46' hin verjüngt. Dadurch wird auf der vom spitzen Winkel α abgewandten Oberfläche der Krempe 46 ein im Querschnitt schräg verlaufender Wandabschnitt 47 in Form einer Fase ausgebildet.

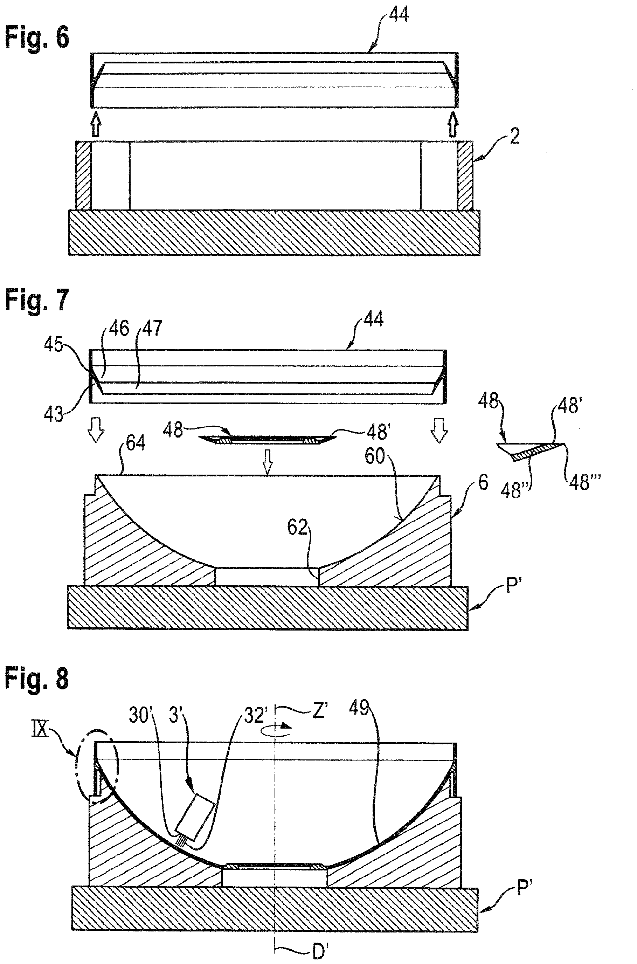

Der auf diese Weise aus dem ringförmigen Rohling 4 herausgearbeitete y-förmige Ringkörper 44 wird dann aus der ersten, zylindrischen Schalungsform 2 entnommen, wie es in Fig. 6 dargestellt ist (Verfahrensschritt e).

Als nächstes wird im Schritt f) eine zweite Schalungsform 6 auf der Bearbeitungsplattform P (oder auf einer anderen entsprechenden Bearbeitungsplattform P') bereitgestellt. Diese zweite Schalungsform 6 weist an ihrer von der Bearbeitungsplattform P' weg weisenden Oberseite eine konkav gewölbte Formoberfläche 60 mit einem oberen ringförmigen Rand 64 auf.

Im Beispiel der Fig. 7 ist die zweite Schalungsform 6 zudem mit einer zentralen Ausnehmung 62 zur Aufnahme eines Mannlochflansches 48 versehen.

Der y-förmige Ringkörper 44 wird nach dem Herausnehmen aus der ersten Schalungsform 2 um 180° um eine Querachse gedreht und mit dem vom spitzen Winkel α zwischen der zylindrischen Außenwand 45 und der Krempe 46 gebildeten Spaltraum 43 auf den oberen Rand 64 der zweiten Schalungsform 6 derart aufgesetzt, dass die Krempe 46 des y-förmigen Ringkörpers 44 auf der konkav gewölbten Formoberfläche 60 der zweiten Schalungsform 6 aufliegt, wie es in Fig. 8 gezeigt ist. Die Krempe 46 bedeckt dabei den oberen Rand 64 der gewölbten Formoberfläche 60 und der schräg verlaufende Wandabschnitt 47 der Krempe 46 weist von der Formoberfläche 60 weg.

In Fig. 8 ist der Verfahrensschritt h) dargestellt, bei welchem durch einen Spritzstrahl 32' einer Spritzdüse 30' einer Spritzvorrichtung 3' das Metallmaterial vorteilhafterweise schichtweise auf die Formoberfläche 60 aufgetragen wird. Die Spritzvorrichtung 3' kann dieselbe Spritzvorrichtung sein, wie die im Schritt b) verwendete Spritzvorrichtung, sie kann aber auch, wenn die Fertigungsschritte an unterschiedlichen Arbeitsplätzen, zum Beispiel auf einer anderen Bearbeitungsplattform 6', durchgeführt werden, eine andere Spritzvorrichtung sein.

Das Metallmaterial wird von der Spritzdüse 30' gemäß demselben Spritzverfahren wie im Schritt b) ebenfalls bevorzugt schichtweise auf die Formoberfläche 60 und den schräg verlaufenden Wandabschnitt 47 des Ringkörpers 44 aufgetragen, so dass sich ausgehend von der Krempe 46 des ringförmigen Körpers 44 ein gewölbter Domabschnitt 49 auf der Formoberfläche 60 bildet, der integral mit dem y-förmigen Ringkörper 44 ausgebildet ist. Auch bei diesem Verfahrensschritt wird die Bearbeitungsplattform P' mit der zweiten Schalungsform 6 um eine Drehachse D', die koaxial mit der Symmetrieachse Z' der zweiten Schalungsform 6 und von deren Formoberfläche 60 ist, während des Spritzvorgangs rotiert.

In Fig. 8 ist außerdem dargestellt, wie auch der Mannlochflansch 48, der im Bereich seines Außenumfangs ebenfalls einen ringförmigen im Querschnitt schräg verlaufenden Wandabschnitt 48' aufweist, wodurch sich die Wand 48" des Mannlochflansches 48 zum Außenumfangsrand 48‴ des Mannlochflansches 48 hin verjüngt, ebenfalls von der Spritzdüse 30' mit dem Metallmaterial beaufschlagt wird, so dass auch der Mannlochflansch 48 integral in den Domabschnitt 49 eingebunden wird. Die so geschaffene Einheit aus dem Domabschnitt 49, dem Ringkörper 44 und dem Mannlochflansch 48 bildet den oberen Behälterboden 12 des Leichtbau-Druckbehälters 1.

Für den Fall, dass keine Mannlochöffnung erforderlich ist, ist die zweite Schalungsform 6 ohne die zentrale Ausnehmung 62 ausgebildet und der Domabschnitt 49' erstreckt sich in diesem Bereich durchgehend und bildet eine einheitliche sphärische oder abgeflacht-sphärische Fläche aus, wie in Fig. 16 anhand des unteren Behälterbodens 14 zu sehen ist. Diese Einheit aus Ringkörper und Domabschnitt bildet dann den unteren Behälterboden 14 des in Fig. 16 dargestellten Leichtbau-Druckbehälters 1.

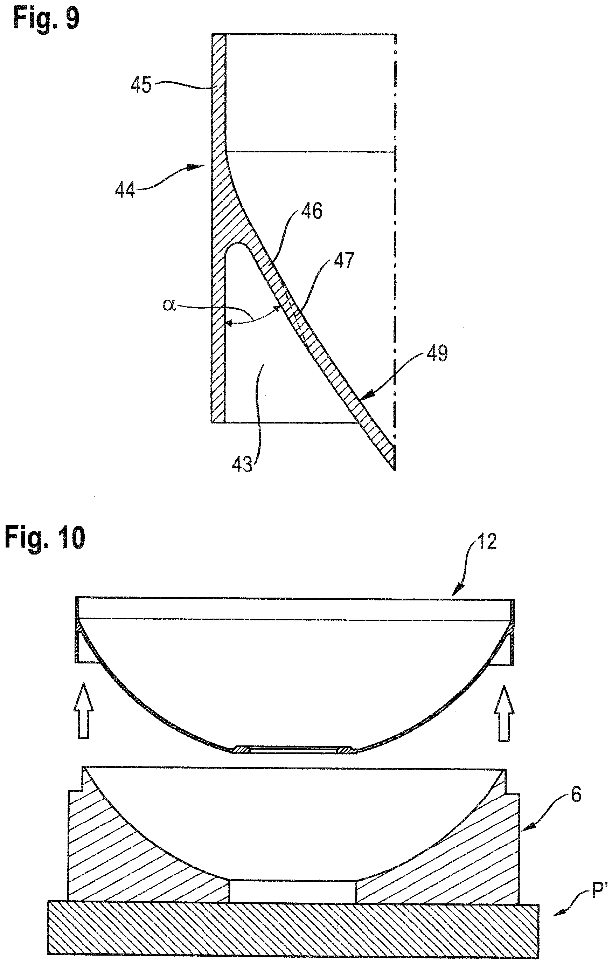

Fig. 9 zeigt die Einzelheit IX aus Fig. 8, in der zu erkennen ist, dass die Krempe 46 an ihrem hier beispielhaft noch dargestellten schräg verlaufenden Wandabschnitt 47 kontinuierlich in die Wandung des gewölbten Domabschnitts 49 übergeht. Die hier gezeigte ehemalige Oberfläche des schräg verlaufenden Wandabschnitts 47 ist in der fertigen Einheit aus dem y-förmigen Ringkörper 44 und dem Domabschnitt 49 nicht mehr feststellbar und daher in Fig. 9 nur gestrichelt gezeichnet.

In Fig. 10 ist dargestellt, wie der fertige Behälterboden 12 aus der Schalungsform 6 entnommen wird (Schritt i).

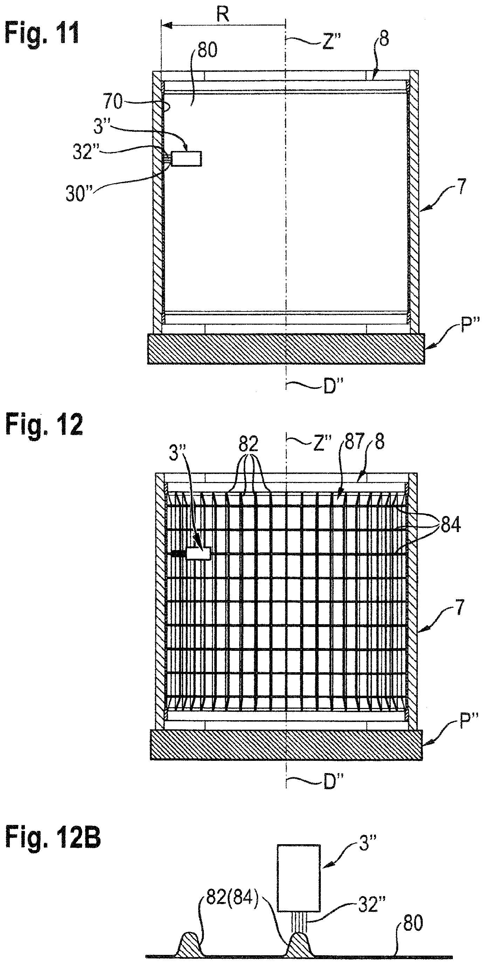

Fig. 11 zeigt eine Plattform P", bei der es sich um eine weitere Plattform oder um eine der Plattformen P oder P' handeln kann. Auf dieser Plattform P" ist eine dritte, zylindrische Schalungsform 7 bereitgestellt, die wie die erste zylindrische Schalungsform 2 ebenfalls aus einer Mehrzahl von Segmenten besteht. Auch diese dritte, zylindrische Schalungsform 7 ist auf ihrer Innenseite mit einer Trennschicht oder einem Trennmittel versehen, um die spätere Herausnahme des in der Form gebildeten Werkstücks zu erleichtern.

Weiterhin ist in Fig. 11 zu sehen, wie eine Spritzvorrichtung 3", die eine Spritzdüse 30" aufweist, mittels eines Spritzstrahls 32" Metallmaterial auf die zylindrische Innenfläche 70 der dritten, zylindrischen Schalungsform 7 in einer Schicht oder schichtweise aufträgt. Auch die Spritzvorrichtung 3" kann eine weitere Spritzvorrichtung oder eine der Spritzvorrichtungen 3 oder 3' sein.

Während des Auftragens des Metallmaterials auf die Innenfläche 70 unter Bewegung der Spritzvorrichtung 3" in Axialrichtung und gegebenenfalls auch in Umfangsrichtung wird die Bearbeitungsplattform P" mit der darauf festgespannten dritten, zylindrischen Schalungsform 7 um eine Drehachse D", die mit der Zylinderachse Z" der dritten Schalungsform 7 koaxial ist, rotiert. Durch dieses Auftragen des Metallmaterials auf die Innenfläche 70 der dritten Schalungsform wird auf der Innenfläche 70 eine zylindrische Behälterhaut 80 zur Bildung eines in der dritten Schalungsform entstehenden dünnwandigen zylindrischen Rohrkörpers 8 erzeugt (Schritt b'). Diese Behälterhaut 80 ist im Verhältnis zum Innenradius R der dritten, zylindrischen Schalungsform 7 äußerst dünn. Die Wandstärke der zylindrischen Behälterhaut 80 beträgt bei einem Radius R von beispielsweise 2,5 m nur etwa 1,5 mm bis 2,5 mm, vorzugsweise 2 mm.

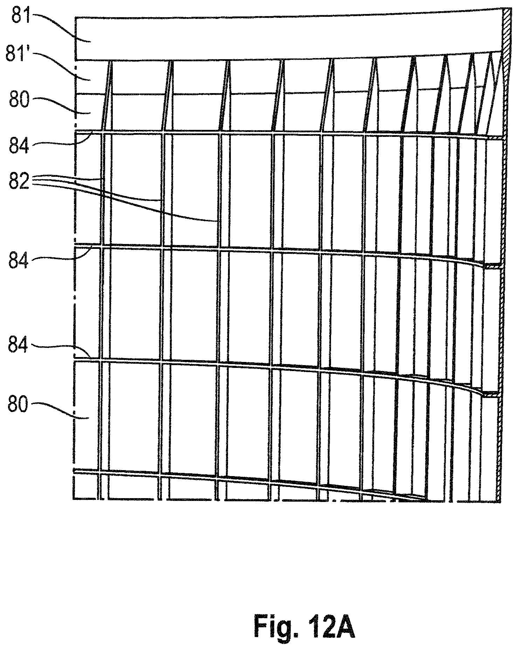

In Fig. 12 ist dargestellt, wie mittels der Spritzvorrichtung 3" auf die Innenseite der im Schritt b') gebildeten zylindrischen Behälterhaut 80 in einem nächsten Schritt c') durch bevorzugterweise schichtweises lokales Auftragen des Metallmaterials mittels des Spritzstrahls 32" parallel zur Zylinderachse Z" verlaufende und in Umfangsrichtung voneinander beabstandete Längsrippen 82 sowie in Umfangsrichtung verlaufende und in Axialrichtung voneinander beabstandete Spanten 84 aufgetragen werden. Auch dabei bewegt sich die Spritzvorrichtung 3" in Axialrichtung und gegebenenfalls auch in Umfangsrichtung und zumindest beim Auftragen der Spanten 84 rotiert die Bearbeitungsplattform P" mit der darauf gespannten, dritten zylindrischen Schalungsform 7. Die Längsrippen 82 und die Spanten 84 bilden gemeinsam eine mit der Behälterhaut 80 integral ausgebildete Versteifungsstruktur 87 der Behälterhaut 80 aus.

Außerdem werden im Schritt b') oder c') der obere Randbereich 81 und der untere Randbereich 86 der Behälterhaut 80 mit einer dickeren Wandstärke ausgebildet, wie es in Fig. 12 A zu sehen ist, um den aus dem zylindrischen Rohrkörper 8 gefertigten zylindrischen Behälterabschnitt 10 in diesem Bereich mit einem jeweiligen Behälterboden 12, 14 oder einem weiteren zylindrischen Behälterabschnitt verschweißen zu können. Die sehr dünne Wandstärke der Zylinderhaut 80 geht dazu in einem Übergangsbereich 81', 86' allmählich in die dickere Wandstärke des zugeordneten Randbereichs 81, 86 über. Die Randbereiche 81, 86 sind vorzugsweise nicht mit Längsrippen 82 oder Spanten 84 verstärkt. Die achsparallel verlaufenden Längsrippen 82 gehen, vorzugsweise unter Reduzierung ihrer Radialerstreckung, in den jeweiligen Übergangsbereich 81', 86' über.

Fig. 12B zeigt vergrößert, wie im Schritt c') das Metallmaterial durch den Spritzstrahl 32" der Spritzvorrichtung 3" lokal voneinander beabstandet auf die vorher gefertigte Behälterhaut 80 aufgebracht wird, um die Längsrippen 82 beziehungsweise die Spanten 84 zu erzeugen. Diese symbolische Darstellung trifft sowohl für das Erzeugen der Längsrippen 82 als auch für das Erzeugen der Spanten 84 zu, so dass im Beispiel der Fig. 12A die rechtwinklig zueinander ausgerichtete Anordnung der Längsrippen 82 und der Spanten 84 nicht dargestellt ist.

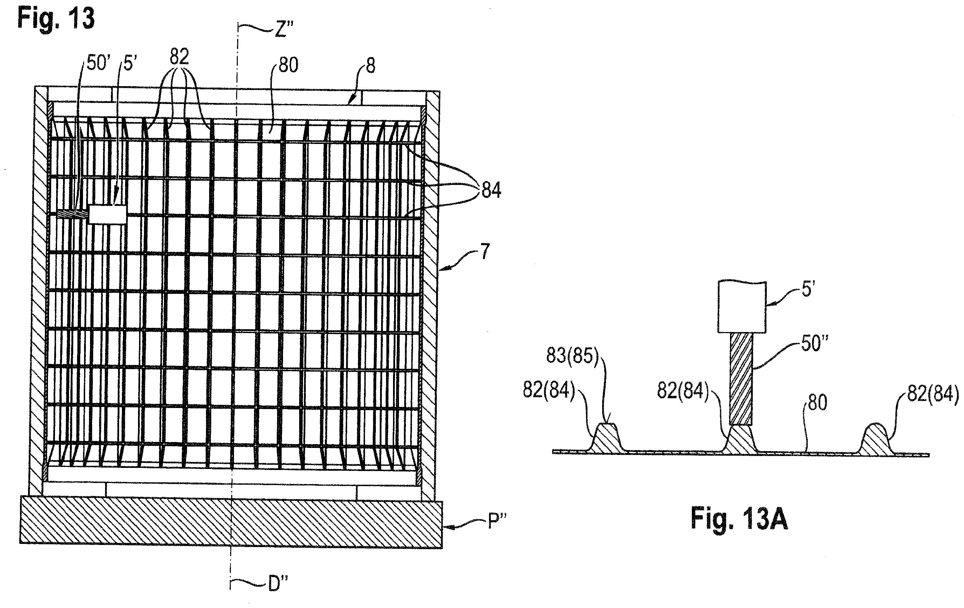

Fig. 13 zeigt einen ersten mechanischen Bearbeitungsschritt c'1) des in den Schritten b') und c') erzeugten zylindrischen Rohrkörpers 8 mit einem Fräswerkzeug 50' eines Fräsers 5', bei dem es sich auch um das Fräswerkzeug 50 des Fräsers 5 handeln kann, das in den Bearbeitungsschritten c) und d) eingesetzt worden ist. Das Fräswerkzeug 50' bearbeitet auf der Innenseite des zylindrischen Rohrkörpers 8 die radial inneren Flächen 83 der Längsrippen 82 und die radial inneren Flächen 85 der Spante 84 derart, dass sie plan werden und eine vorgegebene Abmessung in Radialrichtung erhalten. Dieser Schritt d' des Planens der radial inneren Flächen 83, 85 ist in Fig. 13A vergrößert schematisch dargestellt. Auch hier ist die rechtwinklige Anordnung der Längsrippen 82 und der Spanten 84 zueinander der Einfachheit halber nicht dargestellt.

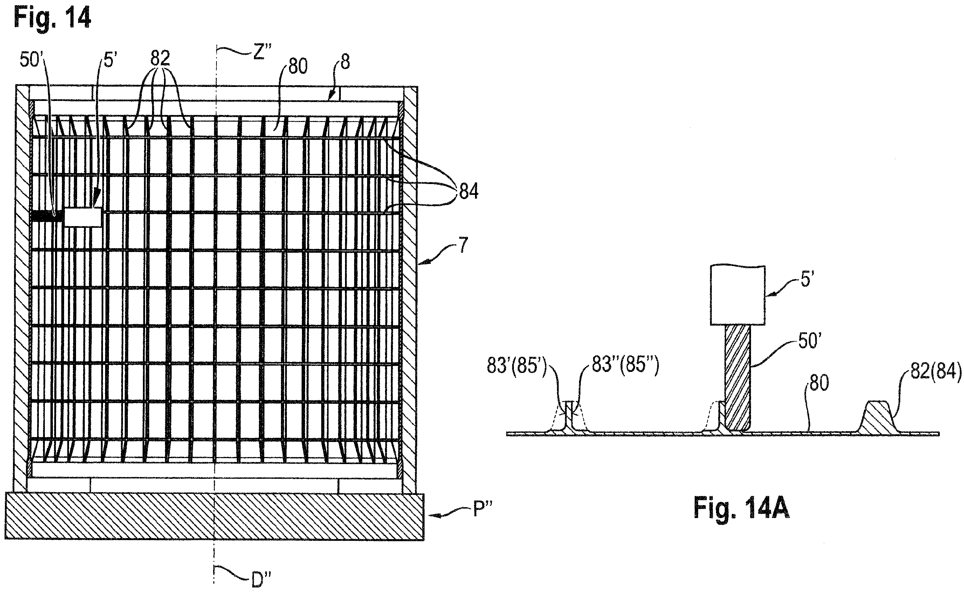

Fig. 14 zeigt den Verfahrensschritt c'2), in welchem die seitlichen Flächen 83', 83" beziehungsweise 85', 85" der Längsrippen 82 beziehungsweise der Spanten 84 mittels des Fräswerkzeugs 50' abgefräst werden, um jeweils eine plane (also ebene) seitliche Oberfläche zu erhalten und um die Abstände zwischen benachbarten Längsrippen 82 und benachbarten Spanten 84 jeweils auf ein vorgegebenes Maß zu bringen, wie es in Fig. 14A gezeigt ist, die eine in gleicher Weise schematische Darstellung ist, wie die Fig. 13A. Das hierfür verwendete Fräswerkzeug 50' ist vorzugsweise ein am Umfang seiner Schneide abgerundeter Torusfräser.

Die mechanische Bearbeitung des zylindrischen Rohrkörpers 8 in der dritten Schalungsform 7 in den Schritten c'1) und c'2) besitzt den Vorteil, dass die Schalungsform den Rohrkörper 8 gegen die einwirkenden Kräfte des Fräswerkzeugs abstützt. Der gleiche Vorteil ergibt sich bei der mechanischen Bearbeitung des ringförmigen Rohlings 4 in der ersten Schalungsform 2 in den Schritten c) und d).

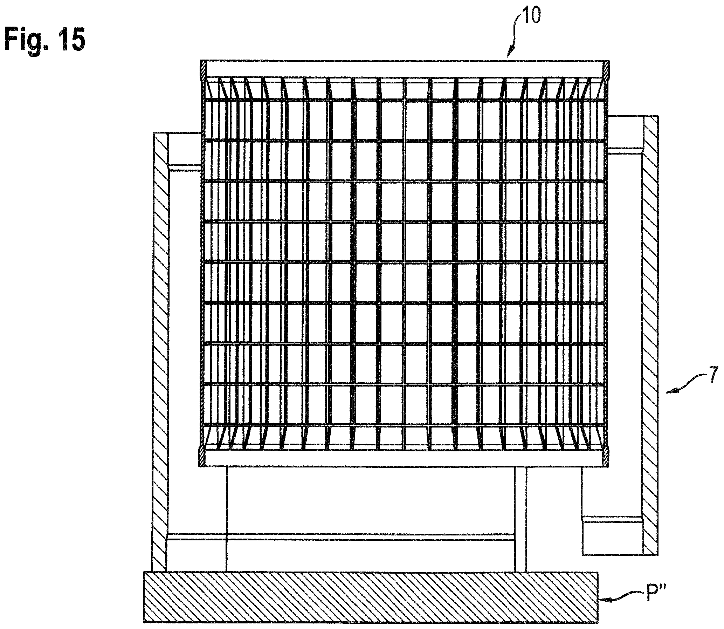

Schließlich ist in Fig. 15 der Verfahrensschritt d') gezeigt, in welchem der aus dem zylindrischen Rohrkörper 8 herausgearbeitete zylindrische Behälterabschnitt 10 entnommen wird.

Dieser fertige zylindrische Behälterabschnitt 10 kann nun - wie die Behälterböden 12, 14 - einer Oberflächenbearbeitung und/oder einer thermischen Behandlung unterzogen werden.

Fig. 16 zeigt einen aus dem oberen Behälterboden 12, dem unteren Behälterboden 14 und dem zylindrischen Behälterabschnitt 10 gebildeten fertigen Leichtbau-Druckbehälter 1. Die beiden Behälterböden 12, 14 sind mit dem zylindrischen Behälterabschnitt 10 verschweißt, wie durch die beiden angedeuteten Schweißnähte 11, 13 symbolisch dargestellt ist. Der Leichtbau-Druckbehälter 1 kann aber auch - wie oben beschrieben - vollintegral oder teilintegral mittels des erfindungsgemäßen Verfahrens hergestellt worden sein und keine oder nur eine Umfangs-Schweißnaht aufweisen.

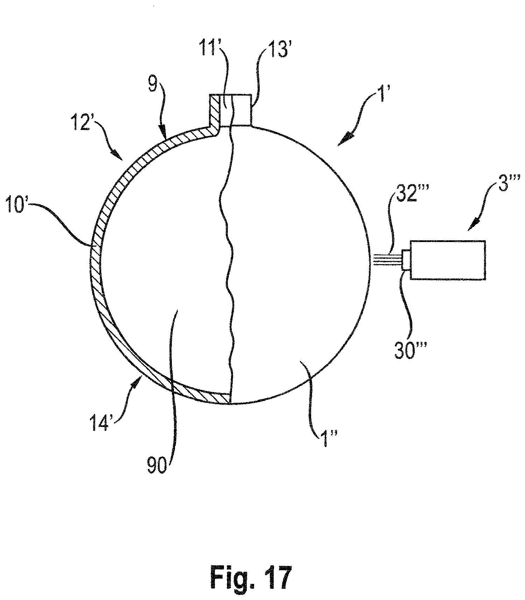

Fig. 17 zeigt einen teilweise aufgeschnittenen kugelartigen Leichtbau-Druckbehälter 1' in Form eines mit zumindest einem Stutzen 13' versehenen kugelförmigen Raumkörpers 1", der wie zwei im Wesentlichen halbkugelförmig gewölbte Behälterböden 12', 14' durch die additive Fertigung mittels des erfindungsgemäßen thermischen Spritzverfahrens integral mit einer einheitlichen kugelförmigen Wandung 10' des Raumkörpers 1" ausgebildet wird. Dabei wird das Metallmaterial durch einen Spritzstrahl 32‴ mittels zumindest einer Spritzdüse 30‴ einer Spritzvorrichtung 3‴ gemäß dem thermischen Spritzverfahren auf die Außenoberfläche 90 einer vierten, kugelförmigen oder kugelähnlichen Schalungsform 9 aufgetragen. Die vierte Schalungsform 9 bestimmt das Innenvolumen dieses alternativen Leichtbau-Druckbehälters 1'. Fig. 17 zeigt beispielhaft eine Öffnung 11' des Leichtbau-Druckbehälters 1', die von einem Zylinderstutzen 13' umgeben ist, der ebenfalls durch additive Fertigung integral mit der Wandung 10' ausgebildet ist. Es können auch mehrere derartige Öffnungen und/oder Stutzen vorgesehen sein, die dann auch der Befestigung des Leichtbau-Druckbehälters 1' dienen können. Die kugelförmige oder kugelähnliche Schalungsform 9 wird nach der Herstellung des kugelförmigen Raumkörpers 1" zertrümmert und/oder geschmolzen und durch die Öffnung(en) 11' abgeführt. Dieser kugelähnliche Leichtbau-Druckbehälter 1' mit dem kugelförmigen Raumkörper 1" kann beispielsweise ein Satellitentank sein.

Auch wenn in den Fig. 12 bis 16 eine auf der radial inneren Seite der Behälterhaut 80 ausgebildete Versteifungsstruktur 87 als Orthogrid mit rechtwinklig zueinander verlaufenden Längsrippen 82 und Spanten 84 gezeigt ist, ist die Erfindung nicht darauf beschränkt. Die Versteifungsstruktur kann alternativ auch auf der radial äußeren Seite der Behälterhaut ausgebildet sein, wenn die Behälterhaut auf der Außenseite der dritten, zylindrischen Schalungsform gebildet worden ist. Auch ist es möglich, Versteifungsstrukturen auf der radial inneren und auf der radial äußeren Seite der Behälterhaut aufzubringen, wenn entsprechende Schalungsformen zur Verfügung gestellt werden.

Außerdem ist die Erfindung nicht auf ein Orthogrid als Versteifungsstruktur beschränkt, sondern die Versteifungsrippen können auch in einem anderen Winkel zueinander stehen und beispielsweise in Form eines Rautenmusters gestaltet sein.

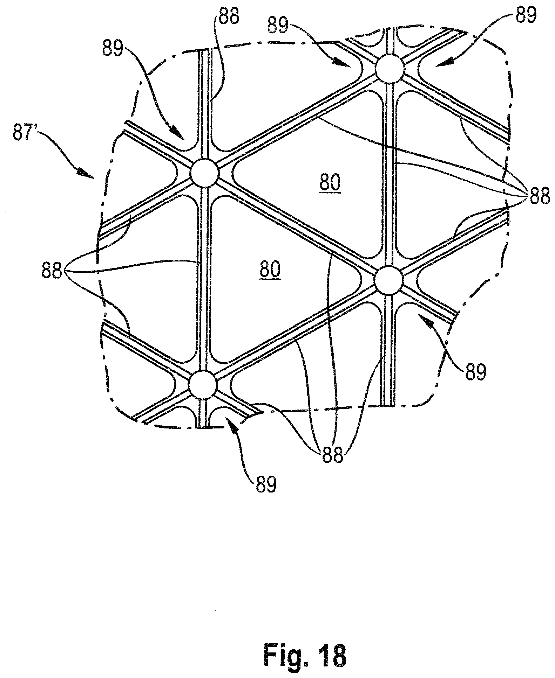

Eine abgewandelte Versteifungsstruktur 87' ist in Fig. 18 gezeigt, in welcher die Versteifungsrippen in Form eines Isogrids angeordnet sind und dabei Isogridrippen 88 bilden, die in Isogridknoten 89 miteinander verbunden sind.

Fig. 19 zeigt eine weitere alternative Ausführungsform des Verfahrens zur erfindungsgemäßen Herstellung eines gewölbten Behälterbodens, wobei der Behälterboden 12" auf der konvex gewölbten Formoberfläche 60' der auf einer Bearbeitungsplattform P‴ angeordneten konvex ausgebildeten zweiten Schalungsform 6' mittels des thermischen Spritzverfahrens durch das Aufsprühen eines Metallmaterials auf die konvexe Formoberfläche 60' gebildet wird.

Dazu wird, wie dies bereits mit Bezug auf die anderen Ausführungsbeispiele beschrieben worden ist, eine thermische Spritzvorrichtung 3"" über die konvex gewölbte Formoberfläche 60' in mehreren Arbeitsgängen hinweg geführt, wobei die aus der Spritzdüse 30"" austretenden Partikel des Metallmaterials als Spritzstrahl 32"", der auch hier ein mit den Partikeln des Metallmaterials angereicherter Hochgeschwindigkeits-Gasstrahl ist, in einer Schicht oder schichtweise in mehreren Schichten auf die konvex gewölbte Formoberfläche 60' aufgetragen werden bis die vorgegebene Wandstärke des so hergestellten Domabschnitts 49" erreicht ist.

Dabei wird der Umfangsrandbereich 49‴ des gewölbten Domabschnitts 49" auf der von der Formoberfläche 60' abgewandten Seite als schräg verlaufender Wandabschnitt 49"" ausgebildet, dessen Wandstärke sich zum freien Umfangsrand des Domabschnitts 49" hin verjüngt, wie es in Fig. 19 und in der vergrößerten Darstellung der Fig. 20 zu sehen ist. Der so ausgebildete im Querschnitt schräg verlaufende Wandabschnitt 49"" des Domabschnitts 49" kann nach der Fertigstellung des Domabschnitts 49" mechanisch, beispielsweise spanabhebend, bearbeitet werden; er kann aber auch unbearbeitet belassen werden.

Auf den Umfangsrandbereich 49‴ des noch auf der konvexen zweiten Schalungsform 6' liegenden Domabschnitts 49" wird ein ringförmiger Formkern 6" aufgesetzt, der mit seiner konkaven Innenfläche auf der konvexen Außenfläche des Umfangsrandbereichs 49‴ des bereits gefertigten Domabschnitts 49" aufliegt. Der ringförmige Formkern 6" liegt dabei koaxial zur Rotationsachse X der konvexen zweiten Schalungsform 6'. Die radial äußere Formoberfläche 6‴ des Formkerns 6" ist im Wesentlichen zylindrisch und verläuft im gezeigten Beispiel parallel zur Rotationsachse X der konvexen zweiten Schalungsform 6' und damit auch des Domabschnitts 49".

Nach dem Aufsetzen des Formkerns 6" auf den Umfangsrandbereich 49‴ des Domabschnitts 49" wird, wie in Fig. 20 schematisch dargestellt ist, mittels des aus der Spritzdüse 30"" der Spritzvorrichtung 3"" austretenden thermischen Spritzstrahls 32"" das Metallmaterial auf die radial äußere Formoberfläche 6‴ des ringförmigen Formkerns 6" sowie auf den noch nicht mit Metallmaterial besprühten unteren Bereich der Formoberfläche 60' der konvex ausgebildeten zweiten Schalungsform 6' aufgesprüht, wobei das Metallmaterial auch auf den im Querschnitt schräg verlaufenden und umlaufenden Wandabschnitt 49"" am freien Ende des Umfangsrandbereichs 49‴ des Domabschnitts 49" aufgesprüht wird, so dass - wie dies vorstehend bereits in Verbindung mit den anderen Ausführungsbeispielen beschrieben worden ist - an dieser Stelle eine integrale und nahtlose Anformung des so entstehenden y-förmigen Ringkörpers 44' an den Domabschnitt 49" zur integralen Bildung des Behälterbodens 12" aus dem Domabschnitt 49" und dem Ringkörper 44' erfolgt.

Wie im Beispiel der Fig. 9 ist auch hier der sich im Querschnitt verjüngende Wandabschnitt 48"" nur als gestrichelte Linie dargestellt, da aufgrund der integralen, monolithischen Ausbildung der hier in den y-förmigen Ringkörper 44' übergehenden Wandung des Domabschnitts 49" nach der Fertigstellung des Behälterbodens 12" keine Trennfläche oder Grenzfläche feststellbar ist.

Alternativ kann die Wandung des Domabschnitts 49" auch bis an die Bearbeitungsplattform P‴ heran gespritzt werden, wobei dann der sich im Querschnitt verjüngende Wandabschnitt 48"" mit sich verringernder Wanddicke an die Bearbeitungsplattform P‴ angrenzt. Der Ringkörper 44' kann dann als reiner Zylindermantel daran angeformt werden.

Grundsätzlich kann die in Verbindung mit den Figuren 19 und 20 beschriebene Vorgehensweise auch unter Verwendung einer konkaven Schalungsform durchgeführt werden, wobei dann das Spritzen des Metallmaterials - wie im Beispiel der Fig. 8 von der Innenseite erfolgt und nur der radial äußere Teil des Ringkörpers von der Außenseite gespritzt werden muss.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: zylinderartiger Leichtbau-Druckbehälter
- 1': kugelartiger Leichtbau-Druckbehälter
- 1": kugelförmiger Raumkörper
- 2: erste, zylindrische Schalungsform
- 3: Spritzvorrichtung
- 3': Spritzvorrichtung
- 3": Spritzvorrichtung
- 3‴: Spritzvorrichtung
- 3"": Spritzvorrichtung
- 4: ringförmiger Rohling
- 5: Fräser
- 5': Fräser
- 6: konkave zweite Schalungsform
- 6': konvexe zweite Schalungsform
- 6": ringförmiger Formkern
- 6‴: zylindrische Außenumfangsfläche von 6"
- 7: dritte, zylindrische Schalungsform
- 8: zylindrischer Rohrkörper
- 9: vierte Schalungsform
- 10: zylindrischer Behälterabschnitt
- 10': Wandung
- 11': Öffnung
- 12: oberer Behälterboden
- 12': oberer Behälterboden (Abschnitt des kugelförmigen Raumkörpers)
- 12": Behälterboden
- 13': Stutzen
- 14: unterer Behälterboden
- 14': unterer Behälterboden (Abschnitt des kugelförmigen Raumkörpers)
- 20: Segment
- 20': Segment
- 20": Segment
- 21: Oberfläche am Innenumfang
- 22: Trennmittelschicht
- 30: Spritzdüse
- 30': Spritzdüse
- 30": Spritzdüse
- 30‴: Spritzdüse
- 30"": Spritzdüse
- 32: Spritzstrahl
- 32': Spritzstrahl
- 32": Spritzstrahl
- 32‴: Spritzstrahl
- 32"": Spritzstrahl
- 41: axiale Stirnfläche
- 42: axiale Stirnfläche
- 43: Spaltraum
- 44: y-förmiger Ringkörper
- 44': y-förmiger Ringkörper
- 45: zylindrische Außenwand
- 46: Krempe
- 46': Umfangsrad der Krempe
- 47: Wandabschnitt
- 48: Mannlochflansch
- 48': Wandabschnitt
- 48": Außenumfangsrand
- 48‴: Außenumfangsrand
- 49: Domabschnitt
- 49': Domabschnitt
- 49": Domabschnitt
- 49‴: Umfangsrandbereich
- 49"": Wandabschnitt
- 50: Fräswerkzeug
- 50': Fräswerkzeug
- 60: konkav gewölbte Formoberfläche
- 60': konvex gewölbte Formoberfläche
- 62: zentrale Ausnehmung
- 64: oberer Rand
- 70: Innenfläche von 7
- 80: zylindrische Behälterhaut
- 81: oberer Randbereich von 8
- 81': Übergangsbereich
- 82: Längsrippe
- 83: radial innere Fläche
- 83': seitliche Fläche
- 83": seitliche Fläche
- 84: Spante
- 85: radial innere Fläche
- 85': seitliche Fläche
- 85": seitliche Fläche
- 86: unterer Randbereich von 8
- 86': Übergangsbereich
- 87: Versteifungsstruktur
- 87': Versteifungsstruktur
- 88: Isogridrippe
- 89: Isogridknoten
- 90: Oberfläche der vierten Schalungsform

- d: Durchmesser des ringförmigen Rohlings
- d₁: Innendurchmesser des ringförmigen Rohlings
- D: Drehachse
- D': Drehachse
- D": Drehachse
- P: Bearbeitungsplattform
- P': Bearbeitungsplattform
- P": Bearbeitungsplattform
- P‴: Bearbeitungsplattform
- X: Achse der konvexen zweiten Schalungsform
- Z: Zylinderachse
- Z': Zylinderachse
- Z": Zylinderachse

## Patentansprüche

1. Verfahren zur Herstellung eines einen Leichtbau-Drucktank bildenden Leichtbau-Druckbehälters (1; 1') aus einem Metallmaterial mit zwei gewölbten Behälterböden (12, 14; 12', 14'; 12"), wobei die gewölbten Behälterböden (12, 14; 12', 14'; 12") miteinander oder mit zumindest einem zylindrischen Behälterabschnitt (10) verbunden oder integral ausgebildet sind, wobei zumindest einer der Behälterböden (12, 14; 12', 14'; 12") zumindest teilweise durch additive Fertigung mittels eines thermischen Spritzverfahrens nahtlos hergestellt wird, **dadurch gekennzeichnet, dass** das Metallmaterial mittels zumindest einer Spritzdüse (30, 30', 30", 30‴, 30"") als Spritzstrahl auf eine Oberfläche (21, 60, 60', 70, 90) zumindest einer Schalungsform (2, 6, 6', 6", 7, 9) aufgetragen wird und dass die Herstellung des jeweiligen gewölbten Behälterbodens (12, 14) mit den folgenden Schritten erfolgt:
a) Bereitstellen eines im Querschnitt y-förmigen Ringkörpers (44) mit einer zylindrischen Außenwand (45) und einer von dieser unter einem spitzen Winkel (α) radial schräg nach innen verlaufenden Krempe (46) mit einem radial inneren Umfangsrand (46'), wobei sich die Wandstärke der Krempe (46) zum radial inneren Umfangsrand (46') hin verjüngt, wodurch am freien Ende der Krempe (46) ein im Querschnitt schräg verlaufener Wandabschnitt (47) als Fase ausgebildet ist,
b) Bereitstellen einer gewölbten Schalungsform (6), die eine konkav oder konvex gewölbte Formoberfläche (60) aufweist,
c) Aufsetzen des im Querschnitt y-förmigen Ringkörpers (44) auf den Rand (64) der gewölbten Schalungsform (6) derart, dass die Krempe (46) des Ringkörpers (44) auf der gewölbten Formoberfläche (60) aufliegt und deren Rand bedeckt, wobei der die Fase bildende schräg verlaufende Wandabschnitt (47) der Krempe (46) von der Formoberfläche (60) weg weist,
d) Auftragen des Metallmaterials durch einen Spritzstrahl (32') mittels zumindest einer Spritzdüse (30') gemäß dem thermischen Spritzverfahren auf den schräg verlaufenden Wandabschnitt (47) des Ringkörpers (44) und auf die Formoberfläche (60) der gewölbten Schalungsform (6) zur Bildung eines sich nahtlos an die Krempe (46) anschließenden und mit dieser integral ausgebildeten zentralen, gewölbten Domabschnitts (49) und
e) Entnehmen der den Behälterboden (12, 14) bildenden Einheit aus Domabschnitt (49) und Ringkörper (44) aus der gewölbten Schalungsform (6).

2. Verfahren nach Anspruch 1,
**dadurch gekennzeichnet,**
**dass** die Bereitstellung des im Querschnitt y-förmigen Ringkörpers (44) mit den folgenden Schritten erfolgt:
a1) Bereitstellen einer Ringkörper-Schalungsform (2) als Außenschalung oder als Innenschalung,
a2) Auftragen des Metallmaterials durch einen Spritzstrahl (32) mittels zumindest einer Spritzdüse (30) gemäß dem thermischen Spritzverfahren auf die Oberfläche (21) am Innenumfang oder am Außenumfang der Ringkörper-Schalungsform (2) mit einem sich in einer Richtung parallel zur Ringachse (Z) verringernden Innendurchmesser (d) zur Bildung eines ringförmigen Rohlings (4),
a3) Bearbeiten des ringförmigen Rohlings (4) derart, dass ein im Querschnitt y-förmiger Ringkörper (44) mit einer zylindrischen Außenwand (45) und einer von dieser unter einem spitzen Winkel (α) radial schräg nach innen verlaufenden Krempe (46) entsteht,
a4) Bearbeiten des radial inneren Umfangsrands (46') der Krempe (46) derart, dass sich die Wandstärke der Krempe (46) zum radial inneren Umfangsrand (46') hin verjüngt, wodurch am freien Ende der Krempe (46) der im Querschnitt schräg verlaufene Wandabschnitt (47) als Fase ausgebildet wird,
a5) Entnehmen des y-förmigen Ringkörpers (44) aus der ersten Schalungsform (2).

3. Verfahren zur Herstellung eines einen Leichtbau-Drucktank bildenden Leichtbau-Druckbehälters (1; 1') aus einem Metallmaterial mit zwei gewölbten Behälterböden (12, 14; 12', 14'; 12"), wobei die gewölbten Behälterböden (12, 14; 12', 14'; 12") miteinander oder mit zumindest einem zylindrischen Behälterabschnitt (10) verbunden oder integral ausgebildet sind, wobei zumindest einer der Behälterböden (12, 14; 12', 14'; 12") zumindest teilweise durch additive Fertigung mittels eines thermischen Spritzverfahrens nahtlos hergestellt wird, **dadurch gekennzeichnet, dass** das Metallmaterial mittels zumindest einer Spritzdüse (30, 30', 30", 30‴, 30"") als Spritzstrahl auf eine Oberfläche (21, 60, 60', 70, 90) zumindest einer Schalungsform (2, 6, 6', 6", 7, 9) aufgetragen wird und dass die Herstellung des jeweiligen gewölbten Behälterbodens (12") mit den folgenden Schritten erfolgt:
a') Bereitstellen einer gewölbten Schalungsform (6'), die eine konkav oder konvex gewölbte Formoberfläche (60') aufweist,
b') Auftragen des Metallmaterials durch einen Spritzstrahl (32"") mittels zumindest einer Spritzdüse (30"") gemäß dem thermischen Spritzverfahren auf die Formoberfläche (60') der gewölbten Schalungsform (6') zur Bildung eines gewölbten Domabschnitts (49");
c') Ausbilden des Umfangsrandbereichs (49‴) des gewölbten Domabschnitts (49") auf der von der Formoberfläche (60') abgewandten Seite derart, dass sich dessen Wandstärke zum freien Umfangsrand hin verjüngt, wodurch auf der von der Formoberfläche (60') abgewandten Seite des Umfangsrandbereichs (49‴) ein im Querschnitt schräg verlaufener Wandabschnitt (49"") als Fase ausgebildet wird;
d') Anformen eines Ringkörpers (44') an den Umfangsrandbereich (49‴) des Domabschnitts (49") durch Auftragen des Metallmaterials durch einen Spritzstrahl (32"") mittels zumindest einer Spritzdüse (30"") gemäß dem thermischen Spritzverfahren auf den im Querschnitt schräg verlaufenden Wandabschnitt (49"") des Domabschnitts (49") und auf eine Formoberfläche (6‴) einer weiteren Schalungsform (6") für den Ringkörper (44') und
i) Entnehmen der den Behälterboden (12') bildenden Einheit aus Domabschnitt (49") und Ringkörper (44') aus der jeweiligen Schalungsform (6', 6").

4. Verfahren nach Anspruch 1 oder 3,
**dadurch gekennzeichnet,**
**dass** vor der Bildung des gewölbten Domabschnitts (49, 49', 49") ein vorgefertigter Mannlochflansch (48), der im Bereich seines Außenumfangs einen ringförmigen, im Querschnitt schräg verlaufenden Wandabschnitt (48') aufweist, wodurch sich die Wand (48") des Mannlochflansches (48) zum Außenumfangsrand (48‴) des Mannlochflansches (48) hin verjüngt, derart in eine Ausnehmung (62) der gewölbten Schalungsform (6) eingelegt wird, dass der schräg verlaufende Wandabschnitt (48') von der Formoberfläche (60, 60') weg weist und
**dass** bei der Bildung des gewölbten Domabschnitts (49, 49', 49") das Metallmaterial auch auf den schräg verlaufenden Wandungsabschnitt (48') des Mannlochflansches (48) aufgetragen wird, um diesen integral in den Domabschnitt (49, 49' 49") einzuformen.

5. Verfahren nach einem der Ansprüche 1 bis 4,
**dadurch gekennzeichnet,**
**dass** charakteristische Eigenschaften des Spritzstrahls der zumindest einen Spritzdüse geändert werden, wenn dieser vom schräg verlaufenden Wandabschnitt (47; 48'; 48"") der Krempe (46) beziehungsweise des Domabschnitts (49") beziehungsweise des Mannlochflansches (48) weiter wandert und auf die Formoberfläche (60, 60') auftrifft, auf der noch kein Material mittels des thermischen Spritzverfahrens aufgetragen worden ist, und dass die charakteristischen Eigenschaften des Spritzstrahls wieder zurückgeändert werden, wenn dieser von der Formoberfläche (60, 60'), auf der noch kein Material mittels des thermischen Spritzverfahrens aufgetragen worden war, weiter wandert und auf den schräg verlaufenden Wandabschnitt (48'; 47; 48"") des Mannlochflansches (48) beziehungsweise der Krempe (46) beziehungsweise des Domabschnitts (49") auftrifft.

6. Verfahren nach einem der vorhergehenden Ansprüche,
**dadurch gekennzeichnet,**
**dass** nach dem Entnehmen des Behälterbodens (12, 14; 12') eine Oberflächenbearbeitung und/oder eine thermische Behandlung des Behälterbodens (12, 14; 12') durchgeführt wird.

7. Verfahren nach einem der vorhergehenden Ansprüche,
**dadurch gekennzeichnet,**
**dass** die Herstellung des zumindest einen zylindrischen Behälterabschnitts (10) mit den folgenden Schritten erfolgt:
a") Bereitstellen einer zylindrischen Schalungsform (7),
b") Auftragen des Metallmaterials durch einen Spritzstrahl (32") mittels zumindest einer Spritzdüse (30") auf eine Innenfläche (70) oder eine Außenfläche der zylindrischen Schalungsform (7) zur Bildung einer zylindrischen Behälterhaut (80),
c") lokales Auftragen des Metallmaterials durch den Spritzstrahl (32") mittels der zumindest einen Spritzdüse (30") auf die Innenfläche beziehungsweise die Außenfläche der zylindrischen Behälterhaut (80) zur Erzeugung einer mit der Behälterhaut (80) integral ausgebildeten, Rippen (82, 84) aufweisenden Versteifungsstruktur (87; 87') zur Bildung eines zylindrischen Rohrkörpers (8),
d") Entnehmen des den zylindrischen Behälterabschnitt (10) bildenden bearbeiteten zylindrischen Rohrkörpers (8) aus der dritten Schalungsform (7).

8. Verfahren nach Anspruch 7,
**dadurch gekennzeichnet**
**dass** nach dem Schritt c") noch zumindest einer der folgenden Schritte durchgeführt wird:
c"1) Planen der radial inneren Flächen (83; 85) der Versteifungsstruktur (87; 87') mittels mechanischer Bearbeitung,
und/oder
c"2) Planen der seitlichen Flächen (83', 83"; 85', 85") der Versteifungsstruktur (87; 87') mittels mechanischer Bearbeitung.

9. Verfahren nach Anspruch 7 oder 8,
**dadurch gekennzeichnet,**
**dass**, die Versteifungsstruktur (87) in Form eines Orthogrids ausgebildet wird und dazu vorzugsweise parallel zur Zylinderachse (Z") verlaufende und in Umfangsrichtung voneinander beabstandete Längsrippen (82) sowie in Umfangsrichtung verlaufende und in Axialrichtung voneinander beabstandete Spanten (84) ausgebildet werden.

10. Verfahren nach Anspruch 7 oder 8,
**dadurch gekennzeichnet,**
**dass**, die Versteifungsstruktur (87') in Form eines Isogrids ausgebildet wird.

11. Verfahren nach einem der Ansprüche 7 bis 10,
**dadurch gekennzeichnet,**
**dass** nach dem Schritt d") eine Oberflächenbearbeitung und/oder eine thermische Behandlung des zylindrischen Behälterabschnitts (10) durchgeführt wird.

12. Verfahren nach einem der vorhergehenden Ansprüche,
**dadurch gekennzeichnet,**
**dass** der zumindest eine zylindrische Behälterabschnitt (10) und die beiden Behälterböden (12, 14; 12', 14'; 12") separat voneinander mittels des thermischen Spritzverfahrens nahtlos hergestellt und anschließend zusammengefügt werden.

13. Verfahren nach einem der Ansprüche 1 bis 11,
**dadurch gekennzeichnet,**
**dass** der zumindest eine zylindrische Behälterabschnitt (10) und zumindest einer der beiden Behälterböden (12, 14; 12', 14'; 12") integral miteinander mittels des thermischen Spritzverfahrens nahtlos hergestellt werden.

## Claims

1. A method of manufacturing a lightweight pressure vessel (1; 1'), forming a lightweight pressure tank, from a metal material with two domed vessel bottoms (12, 14; 12', 14'; 12"), wherein the domed vessel bottoms (12, 14; 12', 14'; 12") are connected or integrally formed with each other or with at least one cylindrical vessel portion (10),
wherein at least one of the vessel bottoms (12, 14; 12', 14'; 12") is at least partially manufactured seamlessly by additive manufacturing by means of a thermal spray process,
**characterised**
**in that** the metal material is applied by means of at least one spray nozzle (30, 30', 30", 30‴, 30"") as a spray jet to a surface (21, 60, 60', 70, 90) of at least one formwork mould (2, 6, 6', 6", 7, 9) and
that the production of the respective domed vessel bottom (12, 14) is carried out by the following steps:
a) providing an annular body (44) having a y-shaped cross-section with a cylindrical outer wall (45) and a brim (46) extending radially obliquely inwards from there at an acute angle (α) and having a radially inner peripheral edge (46'), the wall thickness of the brim (46) tapering towards the radially inner circumferential edge (46'), as a result of which a wall portion (47) extending obliquely in cross-section is formed as a chamfer at the free end of the brim (46),
b) providing a domed formwork mould (6) having a concave or convex domed mould surface (60),
c) placing the annular body (44), which is y-shaped in cross-section, on the edge (64) of the domed formwork mould (6) in such a way that the brim (46) of the annular body (44) rests on the domed mould surface (60) and covers the edge thereof, the obliquely extending wall portion (47) of the brim (46) forming the chamfer facing away from the mould surface (60),
d) applying the metal material by a spray jet (32') by means of at least one spray nozzle (30') according to the thermal spray method onto the oblique wall portion (47) of the annular body (44) and onto the mould surface (60) of the domed formwork mould (6) to form a central domed portion (49) seamlessly adjoining the brim (46) and integrally formed therewith, and
e) removing the unit forming the vessel bottom (12, 14), consisting of the domed portion (49) and the annular body (44), from the domed formwork mould (6).

2. The method according to claim 1,
**characterised**
**in that** the provision of the annular body (44), which is y-shaped in cross-section, is carried out with the following steps:
a1) providing a ring body formwork mould (2) as external formwork or as internal formwork,
a2) applying the metal material by a spraying jet (32) by means of at least one spraying nozzle (30) according to the thermal spraying method onto the surface (21) at the inner circumference or at the outer circumference of the ring body formwork mould (2) with an inner diameter (d) decreasing in a direction parallel to the ring axis (Z) to form an annular blank (4),
a3) machining the annular blank (4) in such a way that a cross-sectionally y-shaped annular body (44) with a cylindrical outer wall (45) and a brim (46) extending radially obliquely inwards from there at an acute angle (α) is produced,
a4) machining the radially inner peripheral edge (46') of the brim (46) in such a way that the wall thickness of the brim (46) tapers towards the radially inner peripheral edge (46'), as a result of which the wall portion (47), which extends obliquely in cross-section, is formed as a chamfer at the free end of the brim (46),
a5) Removing the y-shaped annular body (44) from the first formwork mould (2).

3. A method of manufacturing a lightweight pressure vessel (1; 1') forming a lightweight pressure tank from a metal material with two domed vessel bottoms (12, 14; 12', 14'; 12"), wherein the domed vessel bottoms (12, 14; 12', 14'; 12") are connected or integrally formed with each other or with at least one cylindrical vessel portion (10),
wherein at least one of the vessel bottoms (12, 14; 12', 14'; 12") is at least partially manufactured seamlessly by additive manufacturing by means of a thermal spray process,
**characterised**
**in that** the metal material is applied by means of at least one spray nozzle (30, 30', 30", 30‴, 30"") as a spray jet to a surface (21, 60, 60', 70, 90) of at least one formwork mould (2, 6, 6', 6", 7, 9) and
**in that** the production of the respective domed vessel bottom (12") is carried out with the following steps:
a') providing a domed formwork mould (6') having a concave or convex domed mould surface (60'),
b') applying the metal material by a spray jet (32"") by means of at least one spray nozzle (30"") according to the thermal spraying method onto the mould surface (60') of the domed formwork mould (6') to form a domed dome portion (49");
c') forming the peripheral edge region (49‴) of the domed dome portion (49") on the side facing away from the mould formwork surface (60') in such a way that its wall thickness tapers towards the free peripheral edge, as a result of which a wall portion (49"") of oblique cross-section is formed as a chamfer on the side of the peripheral edge region (49‴) facing away from the mould surface (60');
d') forming an annular body (44') on the peripheral edge region (49‴) of the dome portion (49") by applying the metal material by a spray jet (32"") by means of at least one spray nozzle (30"") in accordance with the thermal spray method to the wall portion (49"") of the dome portion (49"), which wall portion extends obliquely in cross-section, and to a mould surface (6‴) of a further mould (6") for the annular body (44'), and
i) removing the unit forming the vessel bottom (12'), consisting of the dome portion (49") and the annular body (44'), from the respective formwork mould (6', 6").

4. The method according to claim 1 or 3,
**characterised**
**in that**, prior to the formation of the domed dome section (49, 49', 49"), a prefabricated manhole flange (48), which has in the region of its outer circumference an annular wall section (48') extending obliquely in cross-section whereby the wall (48") of the manhole flange (48) tapers towards the outer circumferential edge (48‴) of the manhole flange (48), is inserted into a recess (62) of the domed formwork mould (6) in such a way that the obliquely extending wall portion (48') faces away from the mould surface (60, 60'), and in that, during the formation of the domed dome portion (49, 49', 49"), the metal material is also applied to the oblique wall portion (48') of the manhole flange (48) in order to mould it integrally into the dome portion (49, 49' 49").

5. The method according to any one of claims 1 to 4,
**characterised**
**in that** characteristic properties of the spray jet of the at least one spray nozzle are changed when it travels further from the obliquely extending wall section (47; 48'; 48"") of the rim (46) or of the dome portion (49") or of the manhole flange (48), respectively, and hits the mould surface (60, 60') on which no material has yet been applied by means of the thermal spraying process, and in that the characteristic properties of the spray jet are changed back again when it travels further from the mould surface (60, 60') onto which no material has yet been applied by means of the thermal spraying process and hits the obliquely extending wall portion (48'; 47; 48"") of the manhole flange (48) or of the manhole flange (48), respectively; 47; 48"") of the manhole flange (48) or the rim (46) or the dome portion (49").

6. The method according to any of the preceding claims,
**characterised**
**in that**, after the removal of the vessel bottom (12, 14; 12'), a surface treatment and/or a thermal treatment of the vessel bottom (12, 14; 12') is carried out.

7. The method according to any of the preceding claims,
**characterised**
**in that** the production of the at least one cylindrical vessel portion (10) is carried out with the following steps:
a") Providing a cylindrical formwork mould (7),
b") applying the metal material by a spray jet (32") by means of at least one spray nozzle (30") to an inner surface (70) or an outer surface of the cylindrical formwork mould (7) to form a cylindrical vessel skin (80),
c") local application of the metal material by the spray jet (32") by means of the at least one spray nozzle (30") to the inner surface or the outer surface of the cylindrical vessel skin (80) to produce a stiffening structure (87; 87') which is integrally formed with the vessel skin (80) and has ribs (82, 84) to form a cylindrical tubular body (8),
d") removing the machined cylindrical tubular body (8) forming the cylindrical vessel portion (10) from the third formwork mould (7).

8. The method according to claim 7,
**characterised**
**in that** at least one of the following steps is further carried out after step c"):
c"1) levelling of the radially inner surfaces (83; 85) of the stiffening structure (87; 87') by means of mechanical machining,
and/or
c"2) levelling the lateral surfaces (83', 83"; 85', 85") of the stiffening structure (87; 87') by means of mechanical machining.

9. The method according to claim 7 or 8,
**characterised**
**in that**, the stiffening structure (87) is formed in the form of an orthogrid and, for this purpose, longitudinal ribs (82) extending parallel to the cylinder axis (Z") and spaced apart from one another in the circumferential direction as well as ribs (84) extending in the circumferential direction and spaced apart from one another in the axial direction are preferably formed.

10. The method according to claim 7 or 8,
**characterised**
**in that** the stiffening structure (87') is formed in the shape of an isogrid.

11. The method according to any one of claims 7 to 10,
**characterised**
**in that** after step d") a surface treatment and/or a thermal treatment of the cylindrical vessel portion (10) is carried out.

12. The method according to any one of the preceding claims,
**characterised**
**in that** the at least one cylindrical vessel portion (10) and the two vessel bottoms (12, 14; 12', 14'; 12") are produced seamlessly separately from one another by means of the thermal spraying process and are subsequently joined together.

13. The method according to any one of claims 1 to 11,
**characterised**
**in that** the at least one cylindrical vessel portion (10) and at least one of the two vessel bottoms (12, 14; 12', 14'; 12") are produced integrally with one another by means of the thermal spraying process.

## Revendications

1. Procédé de fabrication d'un récipient léger sous pression (1 ; 1') constituant un réservoir léger sous pression en un matériau métallique avec deux fonds de récipient bombés (12, 14 ; 12', 14' ; 12"), les fonds de récipient bombés (12, 14 ; 12', 14' ; 12") étant reliés l'un à l'autre ou à au moins une portion de récipient cylindrique (10) ou étant réalisés intégralement,
l'un au moins des fonds de récipient (12, 14 ; 12', 14' ; 12") étant fabriqué sans soudure au moins partiellement par fabrication additive au moyen d'un procédé de projection thermique,
**caractérisé en ce que** le matériau métallique est appliqué sous forme de jet de projection sur une surface (21, 60, 60', 70, 90) d'au moins un moule de coffrage (2, 6, 6', 6", 7, 9) au moyen d'au moins une buse de projection (30, 30', 30", 30‴, 30""), et
**en ce que** la fabrication du fond de récipient bombé respectif (12, 14) comprend les étapes suivantes consistant à :
a) fournir un corps annulaire (44) de section transversale en forme de Y avec une paroi extérieure cylindrique (45) et avec un rebord (46) qui s'étend depuis celle-ci radialement en oblique vers l'intérieur selon un angle aigu (α) et qui présente un bord périphérique radialement intérieur (46'), l'épaisseur de paroi du rebord (46) se rétrécissant vers le bord périphérique radialement intérieur (46'), moyennant quoi à l'extrémité libre du rebord (46), une portion de paroi (47) s'étendant en oblique en coupe transversale est réalisée sous forme de chanfrein,
b) fournir un moule de coffrage bombé (6) qui présente une surface de moulage (60) bombée de manière concave ou convexe,
c) mettre en place le corps annulaire (44) de section transversale en forme de Y sur le bord (64) du moule de coffrage bombé (6) de telle sorte que le rebord (46) du corps annulaire (44) repose sur la surface de moulage bombée (60) et recouvre son bord, la portion de paroi (47) du rebord (46) s'étendant en oblique et constituant le chanfrein étant détournée de la surface de moulage (60),
d) appliquer le matériau métallique en un jet de projection (32') sur la portion de paroi (47) oblique du corps annulaire (44) et sur la surface de moulage (60) du moule de coffrage bombé (6) au moyen d'au moins une buse de projection (30') selon le procédé de projection thermique, afin de constituer une portion de dôme centrale bombée (49) se raccordant sans soudure au rebord (46) et réalisée intégralement avec celui-ci, et
e) retirer du moule de coffrage bombé (6) l'ensemble constitué de la portion de dôme (49) et du corps annulaire (44) et constituant le fond de récipient (12, 14).

2. Procédé selon la revendication 1,
**caractérisé en ce que**
la fourniture du corps annulaire (44) de section transversale en forme de Y comprend les étapes suivantes consistant à :
a1) fournir un moule de coffrage pour corps annulaire (2) sous forme de coffrage extérieur ou de coffrage intérieur,
a2) au moyen d'au moins une buse de projection (30) et selon le procédé de projection thermique, appliquer le matériau métallique en un jet de projection (32) sur la surface (21) à la périphérie intérieure ou à la périphérie extérieure du moule de coffrage pour corps annulaire (2), avec un diamètre intérieur (d) qui se réduit dans une direction parallèle à l'axe de l'anneau (Z), afin de constituer une ébauche (4) de forme annulaire,
a3) usiner l'ébauche (4) de forme annulaire de telle sorte qu'il en résulte un corps annulaire (44) ayant une section transversale en forme de Y avec une paroi extérieure cylindrique (45) et avec un rebord (46) qui s'étend depuis celle-ci radialement en oblique vers l'intérieur selon un angle aigu (α),
a4) usiner le bord périphérique radialement intérieur (46') du rebord (46) de telle sorte que l'épaisseur de paroi du rebord (46) se rétrécit vers le bord périphérique radialement intérieur (46'), moyennant quoi, à l'extrémité libre du rebord (46), la portion de paroi (47) s'étendant en oblique en coupe transversale est réalisée sous forme de chanfrein,
a5) retirer le corps annulaire en forme de Y (44) du premier moule de coffrage (2).

3. Procédé de fabrication d'un récipient léger sous pression (1 ; 1') constituant un réservoir léger sous pression en un matériau métallique avec deux fonds de récipient bombés (12, 14 ; 12', 14' ; 12"), les fonds de récipient bombés (12, 14 ; 12', 14' ; 12") étant reliés l'un à l'autre ou à au moins une portion de récipient cylindrique (10) ou étant réalisés intégralement,
l'un au moins des fonds de récipient (12, 14 ; 12', 14' ; 12") étant fabriqué sans soudure au moins partiellement par fabrication additive au moyen d'un procédé de projection thermique,
**caractérisé en ce que** le matériau métallique est appliqué sous forme de jet de projection sur une surface (21, 60, 60', 70, 90) d'au moins un moule de coffrage (2, 6, 6', 6", 7, 9) au moyen d'au moins une buse de projection (30, 30', 30", 30"", 30""), et
**en ce que** la fabrication du fond de récipient bombé respectif (12, 14) comprend les étapes suivantes consistant à :
a') fournir un moule de coffrage bombé (6'), qui présente une surface de moulage (60') bombée de manière concave ou convexe,
b') appliquer le matériau métallique en un jet de projection (32"") sur la surface de moulage (60') du moule de coffrage bombé (6') au moyen d'au moins une buse de projection (30"") selon le procédé de projection thermique, afin de constituer une portion de dôme bombée (49") ;
c') réaliser la zone de bord périphérique (49'") de la portion de dôme bombée (49") sur le côté détourné de la surface de moulage (60') de telle sorte que son épaisseur de paroi se rétrécit vers le bord périphérique libre, moyennant quoi, sur le côté de la zone de bord périphérique (49'") détourné de la surface de moulage (60'), une portion de paroi (49"") s'étendant en oblique en section transversale est réalisée sous forme de chanfrein ;
d') former un corps annulaire (44') sur la zone de bord périphérique (49'") de la portion de dôme (49") par application du matériau métallique en un jet de projection (32"") sur la portion de paroi (49""), s'étendant en oblique en section transversale, de la portion de dôme (49") et sur une surface de moulage (6‴) d'un autre moule de coffrage (6") pour le corps annulaire (44') au moyen d'au moins une buse de projection (30"") selon le procédé de projection thermique, et
i) retirer du moule de coffrage respectif (6', 6") l'ensemble constitué de la portion de dôme (49") et du corps annulaire (44') et constituant le fond de récipient (12').

4. Procédé selon la revendication 1 ou 3,
**caractérisé en ce que**
avant la réalisation de la portion de dôme bombée (49, 49', 49"), une bride de trou d'homme préfabriquée (48), qui présente au niveau de sa périphérie extérieure une portion de paroi annulaire (48') s'étendant en oblique en section transversale, moyennant quoi la paroi (48") de la bride de trou d'homme (48) se rétrécit vers le bord périphérique extérieur (48'") de la bride de trou d'homme (48), est insérée dans un évidement (62) du moule de coffrage bombé (6) de telle sorte que la portion de paroi (48') s'étendant en oblique est détournée de la surface de moulage (60, 60'), et
**en ce que**, lors de la réalisation de la portion de dôme bombée (49, 49', 49"), le matériau métallique est également appliqué sur la portion de paroi (48') oblique de la bride de trou d'homme (48), afin de la former intégralement dans la portion de dôme (49, 49' 49").

5. Procédé selon l'une des revendications 1 à 4,
**caractérisé en ce que**
des propriétés caractéristiques du jet de projection de ladite au moins une buse de projection sont modifiées lorsque celui-ci continue à se déplacer depuis la portion de paroi oblique (47 ; 48' ; 48"") du rebord (46), respectivement depuis la portion de dôme (49"), respectivement depuis la bride de trou d'homme (48), et qu'il vient tomber sur la surface de moulage (60, 60') sur laquelle aucun matériau n'a encore été appliqué par le procédé de projection thermique, et
**en ce que** les propriétés caractéristiques du jet de projection sont à nouveau modifiées lorsque celui-ci continue à se déplacer depuis la surface de moulage (60, 60') sur laquelle aucun matériau n'a encore été appliqué par le procédé de projection thermique et qu'il vient tomber sur la portion de paroi oblique (48' ; 47 ; 48"") de la bride de trou d'homme (48), respectivement sur le rebord (46), respectivement sur la portion de dôme (49").

6. Procédé selon l'une des revendications précédentes,
**caractérisé en ce que**
après avoir retiré le fond de récipient (12, 14 ; 12'), on effectue un traitement de surface et/ou un traitement thermique du fond du récipient (12, 14 ; 12').

7. Procédé selon l'une des revendications précédentes,
**caractérisé en ce que**
la fabrication de ladite au moins une portion de récipient cylindrique (10) comprend les étapes suivantes consistant à :
a") fournir un moule de coffrage cylindrique (7),
b") appliquer le matériau métallique en un jet de projection (32") sur une surface intérieure (70) ou une surface extérieure du moule de coffrage cylindrique (7) au moyen d'au moins une buse de projection (30"), afin de constituer une peau de récipient cylindrique (80),
c") appliquer localement le matériau métallique en le jet de projection (32") sur la surface intérieure ou sur la surface extérieure de la peau de récipient cylindrique (80) au moyen de ladite au moins une buse de projection (30"), afin de créer une structure de raidissement (87 ; 87') réalisée intégralement avec la peau de récipient (80) et présentant des nervures (82, 84), afin de constituer un corps tubulaire cylindrique (8),
d") retirer du troisième moule de coffrage (7) le corps tubulaire cylindrique traité (8) constituant la portion de récipient cylindrique (10).

8. Procédé selon la revendication 7,
**caractérisé en ce que**
après l'étape c"), on réalise encore au moins l'une des étapes suivantes consistant à :
c"1) égaliser les surfaces radialement intérieures (83 ; 85) de la structure de raidissement (87 ; 87') au moyen d'un usinage mécanique,
et/ou
c"2) égaliser les surfaces latérales (83', 83" ; 85', 85") de la structure de raidissement (87 ; 87') au moyen d'un usinage mécanique.

9. Procédé selon la revendication 7 ou 8,
**caractérisé en ce que**
la structure de raidissement (87) est réalisée sous la forme d'une orthogrille et, à cet effet, on réalise de préférence des nervures longitudinales (82) s'étendant parallèlement à l'axe de cylindre (Z") et espacées les unes des autres dans la direction circonférentielle, ainsi que des membrures (84) s'étendant dans la direction circonférentielle et espacées les unes des autres dans la direction axiale.

10. Procédé selon la revendication 7 ou 8,
**caractérisé en ce que**
la structure de raidissement (87') est réalisée sous la forme d'une isogrille.

11. Procédé selon l'une des revendications 7 à 10,
**caractérisé en ce que**
après l'étape d"), on réalise un traitement de surface et/ou un traitement thermique de la portion de récipient cylindrique (10).

12. Procédé selon l'une des revendications précédentes,
**caractérisé en ce que**
ladite au moins une portion de récipient cylindrique (10) et les deux fonds de récipient (12, 14 ; 12', 14' ; 12") sont fabriqués sans soudure séparément l'un de l'autre par le procédé de projection thermique, puis sont assemblés.

13. Procédé selon l'une des revendications 1 à 11,
**caractérisé en ce que**
ladite au moins une portion de récipient cylindrique (10) et l'un au moins des deux fonds de récipient (12, 14 ; 12', 14' ; 12") sont fabriqués sans soudure intégralement l'un avec l'autre au moyen du procédé de projection thermique.
